# EUROPEAN PATENT APPLICATION

(11) **EP 4 439 016 A1**
(43) Date of publication of application: **02.10.2024**
(21) Application number: 21967659.0
(22) Date of filing: 16.12.2021
(51) Int. Cl.: G01C 21/36

(54) **ELECTRONIC MAP GENERATION METHOD AND APPARATUS, AND ELECTRONIC MAP**

(71) Applicant: Huawei Technologies Co., Ltd., Shenzhen, Guangdong 518129 (CN)
(72) Inventor: ZHANG, Jing, Shenzhen, Guangdong 518129 (CN)
(74) Representative: Maiwald GmbH
(86) International application number: PCT/CN2021/138662
(87) International publication number: WO 2023/108524

(57) **Abstract**

An electronic map generation method and apparatus, and an electronic map are provided. The method includes: obtaining a first electronic map, where the first electronic map includes a first road junction, and the first road junction includes a first upstream lane and a first downstream lane (S301); and generating M virtual lane lines between the first upstream lane and the first downstream lane, where the M virtual lane lines are used to update the first electronic map, and M is an integer greater than or equal to 1 (S302). A virtual lane line can be generated between an upstream lane and a downstream lane at the first road junction. Further, a virtual lane line can be generated at a road junction based on a specific production requirement, to improve operation efficiency of an autonomous vehicle.

## Description

### TECHNICAL FIELD

Embodiments of this application relate to the field of autonomous driving technologies, and more specifically, to an electronic map generation method and apparatus, and an electronic map.

### BACKGROUND

An autonomous vehicle travels by tracking a lane line. If there is no lane line, driving of the autonomous vehicle is affected. Therefore, the lane line is very important for the autonomous vehicle. However, generally, there is no physically visible lane line at a road junction (for example, a crossroad). In this case, driving of the autonomous vehicle is affected. The road junction is an at-grade intersection, namely, a part at which two or more roads intersect on a same plane, and a traffic flow conflict exists.

To enable the autonomous vehicle to pass through the road junction, a person skilled in the art proposes generating a virtual lane line between an upstream lane and a downstream lane at a road junction in a high-definition map, so that the autonomous vehicle can travel from the upstream lane to the downstream lane based on the virtual lane line.

However, the person skilled in the art does not further point out how to generate a virtual lane line between an upstream lane and a downstream lane at a road junction. Therefore, how to generate a virtual lane line between an upstream lane and a downstream lane at a road junction becomes an urgent technical problem to be resolved.

### SUMMARY

Embodiments of this application provide an electronic map generation method and apparatus, and an electronic map, to generate a virtual lane line between an upstream lane and a downstream lane at a road junction. Further, the electronic map generation method provided in this application can be used to generate a virtual lane line at a road junction based on a specific production requirement, thereby improving operation efficiency of an autonomous vehicle.

According to a first aspect, this application provides an electronic map generation method. The method includes: obtaining a first electronic map, where the first electronic map includes a first road junction, and the first road junction includes a first upstream lane and a first downstream lane; and generating M virtual lane lines between the first upstream lane and the first downstream lane, where the M virtual lane lines are used to update the first electronic map, and M is an integer greater than or equal to 1.

According to the electronic map generation method provided in this embodiment of this application, the M virtual lane lines can be generated between the first upstream lane and the first downstream lane, so that a vehicle can travel from the first upstream lane to the first downstream lane, to pass through the first road junction.

With reference to the first aspect, in a possible implementation, M is related to a vehicle model of an autonomous vehicle, and M is not greater than a preset threshold of a quantity of graded vehicle models. In other words, in this application, a vehicle model of the autonomous vehicle is further considered for the M generated virtual lane lines.

With reference to the first aspect, in a possible implementation, the generating M virtual lane lines between the first upstream lane and the first downstream lane includes: generating the M virtual lane lines between the first upstream lane and the first downstream lane based on at least one of a preset vehicle motion characteristic and a driving environment.

It should be understood that the generated virtual lane line should meet a turning radius of the vehicle, and the turning radius is related to a force exerted on the vehicle in a traveling process in addition to a vehicle steering angle (a vehicle motion characteristic). If the force exerted on the vehicle is insufficient, a phenomenon of slipping occurs. In this case, corresponding curve curvature needs be appropriately reduced. In addition, the force exerted on the vehicle is also affected by the driving environment, for example, a road surface material (a friction coefficient) and a road surface slope (a size of a component force in a vertical direction of a force-bearing surface). Therefore, in this embodiment, when the M virtual lane lines are generated between the first upstream lane and the first downstream lane, the preset vehicle motion characteristic and the driving environment are considered. This reduces a risk that the virtual lane line generated between the first upstream lane and the first downstream lane cannot enable the vehicle to travel from the first upstream lane to the first downstream lane, and further improves a passage rate at the first road junction.

With reference to the first aspect, in a possible implementation, the method further includes: displaying the M virtual lane lines.

With reference to the first aspect, in a possible implementation, at least two of the M virtual lane lines have different presentation manners, and the different presentation manners include at least one of the following: the at least two virtual lane lines have different colors, the at least two virtual lane lines have different virtual-real degrees, and the at least two virtual lane lines have different thicknesses.

In this implementation, the M virtual lane lines are displayed, so that the M virtual lane lines can be quickly determined, so as to quickly implement functions such as unified scheduling, planning, and guidance for the vehicle. In addition, the M generated virtual lane lines may be output to a system operator in a manner of displaying the M virtual lane lines, so that the system operator can perform a next operation.

With reference to the first aspect, in a possible implementation, the method further includes: outputting first information, where the first information indicates information about at least one of the M virtual lane lines, and the information about the at least one virtual lane line includes at least one of the following: a right of way of the at least one virtual lane line, a type of a vehicle to which the at least one virtual lane line is applicable, and physical information of the at least one virtual lane line.

In this embodiment, related information of the at least one generated virtual lane line is output in a manner of outputting the first information, for example, to describe the right of way, the applicable vehicle type, and the physical information of the at least one virtual lane line, so that the operator can perform a next operation. For example, the operator may store the at least one generated virtual lane line, or may re-enter instructions to perform an operation on the at least one virtual lane line.

With reference to the first aspect, in a possible implementation, the first upstream lane and/or the first downstream lane are/is an operation lane, and the operation lane includes a lane having an operation location and/or a production device of the vehicle.

With reference to the first aspect, in a possible implementation, the method further includes: step 21 of determining, from S upstream lanes and T downstream lanes at the first road junction, a to-be-connected upstream lane and a to-be-connected downstream lane that have a topological relationship, where the to-be-connected upstream lane and/or the to-be-connected downstream lane are/is an operation lane, and S and T are positive integers;
step 22 of determining whether the to-be-connected upstream lane and the to-be-connected downstream lane form a target connection lane pair, where when a vehicle having the preset vehicle motion characteristic can travel from the to-be-connected upstream lane to the to-be-connected downstream lane within a range of the first road junction, the to-be-connected upstream lane and the to-be-connected downstream lane form the target connection lane pair; and step 23 of determining the to-be-connected upstream lane as the first upstream lane and determining the to-be-connected downstream lane as the first downstream lane if the to-be-connected upstream lane and the to-be-connected downstream lane form the target connection lane pair.

In this embodiment, an upstream lane including a production device or an operation location of a vehicle is used as the first upstream lane, and/or a downstream lane including a production device or an operation location of a vehicle is used as the first downstream lane.

It may be understood that, after the upstream lane including the production device or the operation location of the vehicle is used as the first upstream lane, and/or the downstream lane including the production device or the operation location of the vehicle is used as the first downstream lane, the virtual lane line generated between the first upstream lane and the first downstream lane can enable the autonomous vehicle to reach a lane including a production device or an operation location at minimum travel costs, to improve operation efficiency. For example, based on a requirement of a user, the vehicle may be required to arrive at the lane including the production device or the operation location as soon as possible, or the vehicle may arrive at the lane including the production device or the operation location by considering aspects such as ensuring easy driving of the vehicle in terms of vehicle safety and control (for example, selecting a maximum turning radius during turning)

With reference to the first aspect, in a possible implementation, the method further includes: if the to-be-connected upstream lane and the to-be-connected downstream lane do not form the target connection lane pair, updating lane type information of the first road junction, where the updating lane type information of the first road junction includes at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane; and re-performing step 21, step 22, and step 23.

In this embodiment, the lane type information of the first road junction may be updated, so that a virtual lane line that meets a production requirement can be generated. For example, it is assumed that, at the first road junction, the upstream lane includes an upstream lane 1, and the downstream lane includes a downstream lane 1 and a downstream lane 2. In addition, it is assumed that the upstream lane 1 has a topological relationship with both the downstream lane 1 and the downstream lane 2, and there is an operation location on the downstream lane 1. In this case, if the upstream lane 1 is used as the to-be-connected upstream lane, and the downstream lane 1 is used as the to-be-connected downstream lane, the vehicle that meets the preset vehicle motion characteristic cannot travel from the upstream lane 1 to the downstream lane 1, that is, a virtual lane line cannot be generated between the upstream lane 1 and the downstream lane 1. In this case, the operation location may be changed to the downstream lane 2, and then whether a virtual lane line that meets the preset vehicle motion characteristic can be generated on the upstream lane 1 and the downstream lane 2 is re-determined. When the virtual lane line that meets the preset vehicle motion characteristic can be generated, the upstream lane 1 may be used as the first upstream lane, and the downstream lane 2 may be used as the first downstream lane.

With reference to the first aspect, in a possible implementation, the method further includes: outputting second information, where the second information indicates that the to-be-connected upstream lane and the to-be-connected downstream lane do not form the target connection lane pair; and receiving third information, where the third information indicates to update the lane type information of the first road junction.

With reference to the first aspect, in a possible implementation, the method further includes: partitioning, as the range of the first road junction, a target range in which at least one of the S upstream lanes and the T downstream lanes is adjacent to the first road junction; and re-performing step 21, step 22, and step 23 based on the first road junction obtained through the range partition.

In this embodiment, the range of the first road junction is expanded, so that a virtual lane line that meets a production requirement can be generated.

With reference to the first aspect, in a possible implementation, the partitioning, as the range of the first road junction, a target range in which at least one of the S upstream lanes and the T downstream lanes is adjacent to the first road junction includes:
when a quantity of target connection lane pairs formed by the S upstream lanes and the T downstream lanes is less than or equal to a preset quantity threshold, partitioning, as the range of the first road junction, the target range in which the at least one of the S upstream lanes and the T downstream lanes is adjacent to the first road junction.

With reference to the first aspect, in a possible implementation, the method further includes: outputting fourth information, where the fourth information indicates that the quantity of target connection lane pairs is less than or equal to the preset quantity threshold; and receiving fifth information, where the fifth information indicates the target range in which the at least one lane is adjacent to the first road junction.

With reference to the first aspect, in a possible implementation, the method further includes: if the to-be-connected upstream lane and the to-be-connected downstream lane do not form the target connection lane pair, updating the to-be-connected downstream lane to an adjacent lane of the to-be-connected downstream lane, and/or updating the to-be-connected upstream lane to an adjacent lane of the to-be-connected upstream lane; and re-performing step 21, step 22, and step 23.

The adjacent lane may be a directly or indirectly adjacent lane, and the adjacent lane can enable the vehicle to change a lane to the operation lane. In this embodiment, the to-be-connected downstream lane is updated to the adjacent lane of the to-be-connected downstream lane, and/or the to-be-connected upstream lane is updated to the adjacent lane of the to-be-connected upstream lane, so that the autonomous vehicle can pass through the first road junction. Further, after passing through the first road junction, the autonomous vehicle may drive to the operation lane by changing the lane, to complete an operation.

With reference to the first aspect, in a possible implementation, the method further includes: obtaining K lane pairs from the S upstream lanes and the T downstream lanes, where each of the K lane pairs includes one of the S upstream lanes and one of the T downstream lanes, and there is a preset topological relationship between the upstream lane and the downstream lane in each lane pair; determining a connection priority of each lane pair; and determining the first upstream lane and the first downstream lane based on the connection priority of each lane pair.

For example, the connection priority of each lane pair may be determined based on a preset right of way of the upstream lane and a preset right of way of the downstream lane in each lane pair. The preset right of way is determined based on at least one of the following information: a service priority, a lane change association relationship, or a preset driving rule.

For example, the connection priority of each lane pair may be alternatively determined based on a traffic flow from the upstream lane to the downstream lane in each lane pair.

With reference to the first aspect, in a possible implementation, the determining the first upstream lane and the first downstream lane based on the connection priority of each lane pair includes: outputting sixth information, where the sixth information indicates the connection priority of each lane pair; receiving seventh information, where the seventh information indicates connection priorities of L lane pairs, and the L lane pairs include all or some of the K lane pairs; and determining the first upstream lane and the first downstream lane based on the seventh information.

With reference to the first aspect, in a possible implementation, the determining the first upstream lane and the first downstream lane based on the seventh information includes: selecting a to-be-processed lane pair in descending order of connection priorities of unprocessed lane pairs in the L lane pairs; determining whether the to-be-processed lane pair and a lane pair for which a virtual lane line is generated meet a conflict determining rule; and if the to-be-processed lane pair and the lane pair for which the virtual lane line is generated meet the conflict determining rule, determining an upstream lane in the to-be-processed lane pair as the first upstream lane, and determining a downstream lane in the to-be-processed lane pair as the first downstream lane.

Compared with a case in which only a virtual lane line for meeting a production task is generated, in this embodiment, when a virtual lane line is generated, some optional virtual lane lines are generated by using information such as a service priority, a lane change association relationship, a preset driving rule, and a traffic flow as factors, to increase selectability of selecting a virtual lane line by an autonomous vehicle, and improve flexibility of vehicle-cloud collaborative driving. In addition, because the virtual lane line generated in this embodiment further meets a preset conflict rule, the electronic map generation method provided in this embodiment can further reduce calculation pressure.

With reference to the first aspect, in a possible implementation, the method further includes: if the to-be-processed lane pair and the lane pair for which the virtual lane line is generated do not meet the conflict determining rule, updating an unprocessed lane pair whose priority is lower than that of the to-be-processed lane pair to the to-be-processed lane pair.

According to a second aspect, this application provides an electronic map. The electronic map includes a first road junction, the first road junction includes a first upstream lane and a first downstream lane, M virtual lane lines are included between the first upstream lane and the first downstream lane, and M is an integer greater than or equal to 1.

With reference to the second aspect, in a possible implementation, at least two of the M virtual lane lines have different presentation manners, and the different presentation manners include at least one of the following: the at least two virtual lane lines have different colors, the at least two virtual lane lines have different virtual-real degrees, and the at least two virtual lane lines have different thicknesses.

With reference to the second aspect, in a possible implementation, the electronic map further includes first information, the first information indicates information about at least one of the M virtual lane lines, and the information about the at least one virtual lane line includes at least one of the following: a right of way of the at least one virtual lane line, a type of a vehicle to which the at least one virtual lane line is applicable, and physical information of the at least one virtual lane line.

With reference to the second aspect, in a possible implementation, the first upstream lane and/or the first downstream lane are/is an operation lane, and the operation lane includes a lane having an operation location and/or a production device of the vehicle.

According to a third aspect, this application provides an electronic map generation apparatus. The apparatus includes: an obtaining module, configured to obtain a first electronic map, where the first electronic map includes a first road junction, and the first road junction includes a first upstream lane and a first downstream lane; and a processing module, configured to generate M virtual lane lines between the first upstream lane and the first downstream lane, where the M virtual lane lines are used to update the first electronic map, and M is an integer greater than or equal to 1.

With reference to the third aspect, in a possible implementation, the processing module is specifically configured to generate the M virtual lane lines between the first upstream lane and the first downstream lane based on at least one of a preset vehicle motion characteristic and a driving environment.

With reference to the third aspect, in a possible implementation, the processing module is further configured to display the M virtual lane lines.

With reference to the third aspect, in a possible implementation, at least two of the M virtual lane lines have different presentation manners, and the different presentation manners include at least one of the following: the at least two virtual lane lines have different colors, the at least two virtual lane lines have different virtual-real degrees, and the at least two virtual lane lines have different thicknesses.

With reference to the third aspect, in a possible implementation, the processing module is further configured to output first information, where the first information indicates information about at least one of the M virtual lane lines, and the information about the at least one virtual lane line includes at least one of the following: a right of way of the at least one virtual lane line, a type of a vehicle to which the at least one virtual lane line is applicable, and physical information of the at least one virtual lane line.

With reference to the third aspect, in a possible implementation, the first upstream lane and/or the first downstream lane are/is an operation lane, and the operation lane includes a lane having an operation location and/or a production device of the vehicle.

With reference to the third aspect, in a possible implementation, the processing module is further configured to perform: step 21 of determining, from S upstream lanes and T downstream lanes at the first road junction, a to-be-connected upstream lane and a to-be-connected downstream lane that have a topological relationship, where the to-be-connected upstream lane and/or the to-be-connected downstream lane are/is an operation lane, and S and T are positive integers; step 22 of determining whether the to-be-connected upstream lane and the to-be-connected downstream lane form a target connection lane pair, where when a vehicle having the preset vehicle motion characteristic can travel from the to-be-connected upstream lane to the to-be-connected downstream lane within a range of the first road junction, the to-be-connected upstream lane and the to-be-connected downstream lane form the target connection lane pair; and step 23 of determining the to-be-connected upstream lane as the first upstream lane and determining the to-be-connected downstream lane as the first downstream lane if the to-be-connected upstream lane and the to-be-connected downstream lane form the target connection lane pair.

With reference to the third aspect, in a possible implementation, the processing module is further configured to: if the to-be-connected upstream lane and the to-be-connected downstream lane do not form the target connection lane pair, update lane type information of the first road junction, where the updating lane type information of the first road junction includes at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane; and re-perform step 21, step 22, and step 23.

With reference to the third aspect, in a possible implementation, the processing module is further configured to: output second information, where the second information indicates that the to-be-connected upstream lane and the to-be-connected downstream lane do not form the target connection lane pair; and receive third information, where the third information indicates to update the lane type information of the first road junction.

With reference to the third aspect, in a possible implementation, the processing module is further configured to: partition, as the range of the first road junction, a target range in which at least one of the S upstream lanes and the T downstream lanes is adjacent to the first road junction; and re-perform step 21, step 22, and step 23 based on the first road junction obtained through the range partition.

With reference to the third aspect, in a possible implementation, the processing module is further configured to: when a quantity of target connection lane pairs formed by the S upstream lanes and the T downstream lanes is less than or equal to a preset quantity threshold, partition, as the range of the first road junction, the target range in which the at least one of the S upstream lanes and the T downstream lanes is adjacent to the first road junction.

With reference to the third aspect, in a possible implementation, the processing module is further configured to: output fourth information, where the fourth information indicates that the quantity of target connection lane pairs is less than or equal to the preset quantity threshold; and receive fifth information, where the fifth information indicates the target range in which the at least one lane is adjacent to the first road junction.

With reference to the third aspect, in a possible implementation, the processing module is further configured to: if the to-be-connected upstream lane and the to-be-connected downstream lane do not form the target connection lane pair, update the to-be-connected downstream lane to an adjacent lane of the to-be-connected downstream lane, and/or update the to-be-connected upstream lane to an adjacent lane of the to-be-connected upstream lane; and re-perform step 21, step 22, and step 23.

With reference to the third aspect, in a possible implementation, the obtaining module is further configured to: obtain K lane pairs from the S upstream lanes and the T downstream lanes, where each of the K lane pairs includes one of the S upstream lanes and one of the T downstream lanes, and there is a preset topological relationship between the upstream lane and the downstream lane in each lane pair. The processing module is further configured to: determine a connection priority of each lane pair; and determine the first upstream lane and the first downstream lane based on the connection priority of each lane pair.

With reference to the third aspect, in a possible implementation, the processing module is further configured to determine the connection priority of each lane pair based on a preset right of way of the upstream lane and a preset right of way of the downstream lane in each lane pair.

With reference to the third aspect, in a possible implementation, the preset right of way is determined based on at least one of the following information: a service priority, a lane change association relationship, or a preset driving rule.

With reference to the third aspect, in a possible implementation, the processing module is further configured to determine the connection priority of each lane pair based on a traffic flow from the upstream lane to the downstream lane in each lane pair.

With reference to the third aspect, in a possible implementation, the processing module is further configured to: output sixth information, where the sixth information indicates the connection priority of each lane pair; receive seventh information, where the seventh information indicates connection priorities of L lane pairs, and the L lane pairs include all or some of the K lane pairs; and determine the first upstream lane and the first downstream lane based on the seventh information.

With reference to the third aspect, in a possible implementation, the processing module is further configured to: select a to-be-processed lane pair in descending order of connection priorities of unprocessed lane pairs in the L lane pairs; determine whether the to-be-processed lane pair and a lane pair for which a virtual lane line is generated meet a conflict determining rule; and if the to-be-processed lane pair and the lane pair for which the virtual lane line is generated meet the conflict determining rule, determine an upstream lane in the to-be-processed lane pair as the first upstream lane, and determine a downstream lane in the to-be-processed lane pair as the first downstream lane.

With reference to the third aspect, in a possible implementation, the processing module is further configured to: if the to-be-processed lane pair and the lane pair for which the virtual lane line is generated do not meet the conflict determining rule, update an unprocessed lane whose priority is lower than that of the to-be-processed lane pair to the to-be-processed lane pair.

According to a fourth aspect, this application provides a vehicle, where the vehicle includes a module described in the third aspect or any possible implementation of the third aspect.

According to a fifth aspect, this application provides a server, where the server includes a module described in the third aspect or any possible implementation of the third aspect.

According to a sixth aspect, this application provides an electronic map generation apparatus, including a memory and a processor. The memory is configured to store program instructions, and the processor is configured to invoke the program instructions in the memory to perform the method according to the first aspect or any one of the possible implementations of the first aspect.

According to a seventh aspect, this application provides a computer-readable medium. The computer-readable medium stores program code used to be executed by a computer, and the program code is used to perform the method according to the first aspect or any one of the possible implementations of the first aspect.

According to an eighth aspect, this application provides a computer program product. The computer program product includes computer program code. When the computer program code is run on a computer, the computer is enabled to implement the method according to the first aspect or any one of the possible implementations of the first aspect.

For technical effects brought by any one of the implementations of the second aspect to the eighth aspect, refer to technical effects brought by any one of the possible implementations of the first aspect. Details are not described again.

### BRIEF DESCRIPTION OF DRAWINGS

FIG. 1 is a diagram of an application scenario to which an embodiment of this application is applicable;
FIG. 2 is a diagram of an architecture of a system to which an embodiment of this application is applicable;
FIG. 3 is a schematic flowchart of an electronic map generation method according to an embodiment of this application;
FIG. 4 is a diagram of connection lane lines according to an embodiment;
FIG. 5 is a schematic flowchart of a method for determining a first upstream lane and a first downstream lane according to an embodiment of this application;
FIG. 6 is a diagram of a structure of a lane topological relationship according to an embodiment of this application;
FIG. 7 is a diagram of a structure of virtual lane lines according to an embodiment of this application;
FIG. 8 is a diagram of a structure of virtual lane lines according to another embodiment of this application;
FIG. 9 is a schematic flowchart of an electronic map generation method according to an embodiment of this application;
FIG. 10 is a diagram of a structure of virtual lane lines according to another embodiment of this application;
FIG. 11 is a schematic flowchart of an electronic map generation method according to another embodiment of this application;
FIG. 12 is a diagram of a structure of an electronic map generation apparatus according to an embodiment of this application; and
FIG. 13 is a diagram of a structure of an electronic map generation apparatus according to another embodiment of this application.

### DESCRIPTION OF EMBODIMENTS

A road junction is generally a junction where two or more roads converge, and is an inevitable place for vehicles, pedestrians, and the like to gather, steer, and evacuate. Based on a moving direction of a vehicle flow, a pedestrian flow, or the like, a road in an upstream direction of a road junction may be referred to as an incoming road (incoming road), and a road in a downstream direction of the road junction may be referred to as an outcoming road (outcoming road). According to a quantity of intersected roads, junctions may be classified into a three-way road junction, a four-way road junction, a multi-way road junction, and the like. Based on how to intersect, junctions may be classified into an at-grade intersection, a grade-separated intersection, and the like. Generally, one road may include one or more lanes. The lane, also referred to as a driving line or a carriageway, is a road used by a vehicle to pass through, and may be a one-way lane or a multi-way lane.

In urban traffic, traffic lights are generally set at road junctions, to ensure traffic safety and smoothness. Phase control of traffic lights can be used to implement orderly passing of vehicles in all directions. In busy hours, dedicated personnel are usually assigned to guide passage at road junctions. In small-scale road junctions without traffic lights, multi-vehicle passage is generally implemented based on autonomous behavior of drivers. When dedicated personnel are required to participate in command and guidance, large labor costs are inevitably caused, and a potential traffic risk may further cause a personal safety crisis. However, a driver generally can only control driving behavior of a vehicle of the driver, but cannot control behavior of another vehicle. Although junction passing can be completed through communication between drivers, in a complex scenario (for example, a large quantity of vehicles gather), communication efficiency is low, and a gridlock or congestion phenomenon cannot be avoided.

In a commercial vehicle production environment, traffic lights are not deployed at many road junctions to maximize production efficiency, and dedicated personnel at junctions are not likely to be arranged, to ensure operation safety and reduce costs. If a vehicle is manually driven, the vehicle can still pass through the road junction through communication between drivers. However, this manner is inefficient and is not conducive to improving production efficiency of an entire system. In an autonomous driving scenario based on vehicle autonomous driving, a vehicle game is used to implement passing through a road junction. Due to lack of a unified decision-making brain, limited information obtained by each vehicle, and interference to vehicle sensing elements, it is difficult for a vehicle to make decisions that help improve operation efficiency. In addition, gridlock may occur, causing the entire system to stop working. This greatly affects operation efficiency of the system.

A technical solution of vehicle-cloud collaborative driving is proposed for the foregoing problem. In this solution, a cloud server performs unified scheduling, planning, and guidance on automated vehicles, to implement efficient operations of a plurality of vehicles at road junctions. For example, the technical solution of vehicle-cloud collaborative driving is as follows: A cloud may determine a passing sequence location of a target vehicle at a road junction based on a topological relationship at the road junction, attribute information of the road junction, status information of the target vehicle, and the like, and indicate, based on the passing sequence location, passing of the target vehicle at the road junction, so that the target vehicle can travel through the road junction at an appropriate occasion. Further, the plurality of vehicles can effectively pass through the road junction, to possibly reduce gridlock or congestion phenomena that occur when the plurality of vehicles are at the road junction. This solution can be applied to some port scenarios to achieve efficient operations at docks.

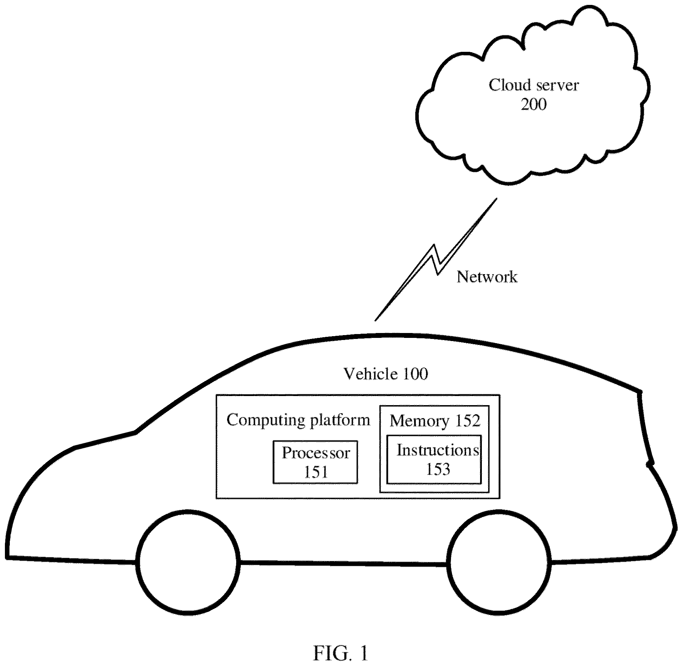

For example, FIG. 1 is a diagram of an application scenario to which an embodiment of this application is applicable. In this application scenario, a vehicle 100 and a cloud server 200 may be included, and the vehicle 100 and the cloud server 200 may communicate with each other through a network.

Some or all functions of the vehicle 100 are controlled by a computing platform 150. The computing platform 150 may include at least one processor 151, and the processor 151 may execute instructions 153 stored in a computer-readable medium like a memory 152. In some embodiments, the computing platform 150 may alternatively be a plurality of computing devices that control individual components or subsystems of the vehicle 100 in a distributed manner. The processor 151 may be any conventional processor, such as a central processing unit (central processing unit, CPU). Alternatively, the processor 151 may further include a graphics processing unit (graphics processing unit, GPU), a field programmable gate array (field programmable gate array, FPGA), a system on chip (system on chip, SOC), an application-specific integrated chip (application-specific integrated circuit, ASIC), or a combination thereof.

In addition to the instructions 153, the memory 152 may further store data, such as a road map, route information, and a location, a direction, a speed, and other such vehicle data of the vehicle, and other information. This information may be used by the vehicle 100 and the computing platform 150 during an operation of the vehicle 100 in autonomous, semi-autonomous, and/or manual modes.

It should be understood that a structure of the vehicle in FIG. 1 should not be understood as a limitation on embodiments of this application. Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

In addition, the cloud server 200 may be further included in the application scenario shown in FIG. 1. The cloud server 200 may be configured to implement functions such as unified scheduling, planning, and guidance of automated vehicles. For example, the cloud server 200 may deliver route information to the vehicles and plan time for the vehicles to pass through a road junction, to avoid conflicts between the vehicles as much as possible.

In an embodiment, the cloud server 200 may alternatively be implemented by using a virtual machine.

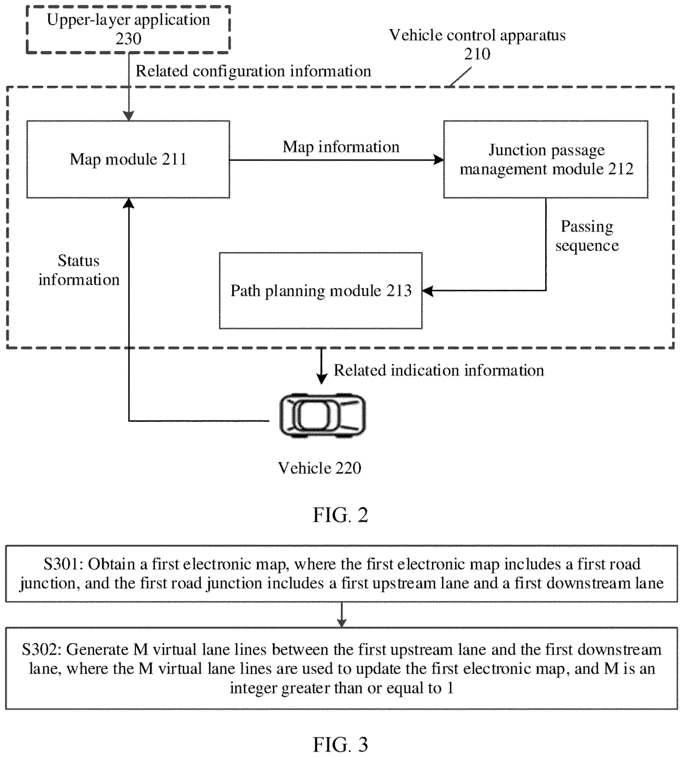

FIG. 2 is a diagram of an architecture of a system to which an embodiment of this application is applicable. Refer to FIG. 2. The system may include a vehicle control apparatus 210 and a vehicle 220. It should be understood that only an example of an apparatus that may be included in the system is described herein instead of any limitation. Optionally, the system may further include an upper-layer application 230, a road side unit (road side unit, RSU), and the like. In addition, quantities of various apparatuses that may be included in the system are not limited to one. For example, the system may include at least one vehicle 220.

The vehicle control apparatus 210 may be configured to provide a related service/function for controlling the vehicle 220, including but not limited to a map service, a junction passage management service, a path planning service, and the like. In a possible implementation, the foregoing services may also be implemented by a corresponding module in the vehicle control apparatus 210. For example, a map module 211 provides the map service, a junction passage management module 212 provides the junction passage management service, and a path planning module 213 provides the path planning service. It should be understood that the map module 211, the junction passage management module 212, and the path planning module 213 described herein may be different modules, or may be two modules, or may be one module, or some module functions may be deployed in an upper-layer application or another system. Embodiments of this application imposes no limitation on services provided by the vehicle control apparatus 210 and specific implementations of the services.

For example, that the map module 211 provides the map service may be providing map information required for performing driving control on the vehicle 120 in a specified target zone, including but not limited to road information, road junction information, other related information, and the like in the target zone. That the junction passage management module 212 provides the junction passage management service may be performing junction passage scheduling on the vehicle 220. An appropriate passing sequence location is planned for the vehicle 220, so that the vehicle 220 can pass in an orderly manner at a corresponding road junction in the target zone. That the path planning module 213 provides the path planning service may be performing path planning for the vehicle, planning a running route of the vehicle in the target zone, and sending indication information to the vehicle, so that the vehicle 220 can move in an orderly manner based on an obtained path. Therefore, under cooperative control of the modules, when a plurality of vehicles need to pass through a same road junction, the vehicle control apparatus may flexibly plan and adjust a passing sequence of the plurality of vehicles at the road junction, to reduce phenomena such as gridlock or congestion that occur when the vehicles are at the road junction, and ensure, as much as possible, even passing through road junctions of a road network structure.

The modules in the vehicle control apparatus may communicate with each other and transmit information to each other, to ensure implementation of related functions of the vehicle control apparatus. For example, the junction passage management module 212 may query vehicle information, the road junction information, the topological relationship, and other related configuration information in the target zone from the map module, and perform, based on the queried information, unified management and scheduling on a plurality of vehicles that need to pass through a same road junction, to obtain a passing sequence of the plurality of vehicles at the road junction. The path planning module 213 may query the passing sequence of the plurality of vehicles from the junction passage management module, and perform path planning for the plurality of vehicles based on the passing sequence, to obtain a to-be-run path for each vehicle. It should be noted that, in FIG. 2, a connection line between the map module 211, the junction passage management module 212, and the path planning module 213 only indicates that information is exchanged between these modules, and does not limit a communication manner, an information transmission direction, and specific information transmitted between different modules.

During specific implementation, the vehicle control apparatus 210 may be presented in a plurality of different product forms. For example, the vehicle control apparatus may be a server. The server may be a single server, or may be a server cluster including a plurality of servers. The server may be a local server. In the Internet of vehicles field, the server may be specifically a cloud server, or may be referred to as a cloud, a cloud server, a cloud controller, an Internet of vehicles server, or the like. The cloud server is a general term for devices or components having a data processing capability, for example, may include a physical device like a host or a processor, may include a virtual device like a virtual machine or a container, or may include a chip or an integrated circuit. Optionally, the vehicle control apparatus 210 may be a road side unit, or a chip or a component in a road side unit.

The vehicle 220 may be any vehicle, including but not limited to a production vehicle, a vehicle of a common work type, a vehicle of a special work type, and the like, and may be a passenger vehicle, a truck, or the like. The vehicle 220 may be registered with the vehicle control apparatus 210, so as to obtain the foregoing services provided by the vehicle control apparatus 210. The services provided by the vehicle control apparatus 210 for the vehicle 220 may be presented on the vehicle 220 in a plurality of forms. For example, the service may be a voice service, a navigation service, an autonomous driving service, a query service, or a voice broadcast service. This is not limited in embodiments of this application. The vehicle 220 may further report related information, for example, status information of the vehicle, to the vehicle control apparatus 210, so that the vehicle control apparatus 210 can perform unified management and scheduling on a plurality of vehicles based on the status information reported by the vehicle 120.

The vehicle 220 may be a vehicle in a fully manual driving mode, or a vehicle in a fully autonomous driving mode, or the vehicle 220 may be a vehicle configured to be in a partially autonomous driving mode. That the vehicle is in the partially autonomous driving mode, for example, means that the vehicle 220 may control the vehicle 220 when in the autonomous driving mode, and may determine current states of the vehicle and an ambient environment by using a manual operation, determine possible behavior of at least one other vehicle in the ambient environment, and control the vehicle 220 based on determined information. When the vehicle 220 is in the fully autonomous driving mode, the vehicle 220 may be set to perform an operation without interacting with a person. It should be understood that when the foregoing system includes at least one vehicle, the at least one vehicle may include vehicles of different vehicle types, vehicles of different operation types, vehicles of different task priorities, or vehicles in different driving modes. In other words, the system may specifically include a plurality of different vehicles. This is not limited in embodiments of this application.

Optionally, a vehicle-mounted device configured to perform information processing and information exchange, for example, a vehicle-mounted telematics box (telematics box, T-Box), may be further placed or installed on the vehicle 220, and the T-Box may communicate with an RSU. Alternatively, if various terminal devices described below are located on a vehicle (for example, placed in the vehicle or installed in the vehicle), the terminal devices may be considered as vehicle-mounted devices, and the vehicle-mounted devices may also be considered as on board units (on board units, OBUs).

Optionally, the vehicle control apparatus 210 may be upward connected to the upper-layer application 230. For example, the upper-layer application may be an application or software. The upper-layer application 230 may be installed and run on user equipment (which may be a cloud device or a terminal device). An operator may configure the vehicle control apparatus 210 through the upper-layer application 230, including but not limited to configuring a function of the vehicle control apparatus 210, delivering a task, delivering a control instruction, and the like. Further, the vehicle control apparatus 210 may perform unified junction passage management on related vehicles in the system based on related configuration information, a task, control instructions, and the like that are obtained from the upper-layer application 230, and by using other information that can be obtained by the vehicle control apparatus 210, to reduce occurrence of a local gridlock or congestion phenomenon in the road network structure.

It may be understood that the user equipment may be any suitable electronic device, including but not limited to a mobile phone, a tablet computer, a desktop computer, a wearable device, or the like. The user equipment may have a user interface (user interface, UI), and may be configured to display the map information, the road junction information, and the topological relationship in the target zone, a vehicle in a map, and the like. The user interface may be a touchscreen, and the operator may implement the foregoing related configuration by performing a touch operation on the user interface. Alternatively, the user equipment may further have another input apparatus like a mouse, a keyboard, and the like. By using these input apparatuses, the operator may perform configuration, task delivery, and the like on the vehicle control apparatus through the upper-layer application.

It should be understood that, in the foregoing technical solution of vehicle-cloud collaborative driving, a prerequisite is that the cloud server obtains a map related to a road junction in advance. Specifically, the map related to the road junction should include a lane line between an upstream lane and a downstream lane at the road junction. However, generally, there is no physically visible lane line at a road junction (for example, a crossroad). Therefore, in consideration of performance and stability, in the foregoing technical solution of vehicle-cloud collaborative driving, a lane line between an upstream road and a downstream road at the road junction is usually first generated in advance based on the road network structure.

However, the person skilled in the art does not further point out how to generate the lane line between the upstream road and the downstream road at the road junction. Therefore, how to generate a lane line between an upstream road and a downstream road at a road junction becomes an urgent technical problem to be resolved.

In view of this, this application provides an electronic map generation method and apparatus. In the technical solutions provided in this application, a lane line between an upstream road and a downstream road can be appropriately determined at a road junction with reference to a vehicle motion characteristic, an actual production requirement, and parameters such as a right of way and a traffic flow, and a risk of a gridlock phenomenon can be reduced.

It should be noted that the technical solutions provided in this application may be applied to production scenarios such as a port, a mine, and a closed (or semi-closed) industrial park, to reduce a risk of a gridlock phenomenon that occurs when a plurality of vehicles are at a road junction, and further improve overall operation efficiency of a vehicle platoon.

Further, according to the technical solutions provided in this application, lane lines between upstream lanes and downstream lanes in a plurality of road junctions in a road network structure can be further generated, to implement efficient running of an entire system. The method and the apparatus are conceived based on a same technical concept. The method and the apparatus have similar principles for resolving problems. Therefore, for implementations of the apparatus and the method, refer to each other. Details are not repeatedly described.

It should be noted that the technical solutions provided in this application may be applied to the Internet of vehicles, for example, vehicle to everything (vehicle to everything, V2X), long term evolution-vehicle (long term evolution-vehicle, LTE-V), and vehicle to vehicle (vehicle to vehicle, V2V). For example, the technical solutions may be applied to a vehicle having a driving movement function, or another apparatus having a driving movement function in a vehicle. The another apparatus includes but is not limited to another sensor like a vehicle-mounted terminal, a vehicle-mounted controller, a vehicle-mounted module, a vehicle-mounted assembly, a vehicle-mounted component, a vehicle-mounted chip, a vehicle-mounted unit, a vehicle-mounted radar, or a vehicle-mounted camera. The vehicle may implement the vehicle control method provided in embodiments of this application by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the solutions in embodiments of this application may be further applied to another intelligent terminal that has a movement control function other than a vehicle, or disposed in another intelligent terminal that has a movement control function other than a vehicle, or disposed in a component of the intelligent terminal. The intelligent terminal may be an intelligent transportation device, a smart home device, a robot, or the like. For example, the intelligent terminal includes but is not limited to an intelligent terminal or another sensor like a controller, a chip, a radar, or a camera in an intelligent terminal, and another component.

For ease of understanding, the following describes in detail specific implementation of the electronic map generation method in embodiments of this application with reference to the method flowchart.

FIG. 3 is a flowchart of an electronic map generation method according to an embodiment of this application. It should be noted herein that the method in embodiments of this application may be performed by a cloud server, or may be performed by an autonomous vehicle. This is not limited in embodiments of this application. However, it should be understood that a same electronic map generation method is used regardless of the cloud server or the autonomous vehicle. It may be further understood that the vehicle control apparatus shown in FIG. 2 may replace the cloud server in FIG. 1.

Descriptions are provided below by using an example in which the vehicle control apparatus performs the electronic map generation method. Refer to FIG. 3. The electronic map generation method may include the following steps.

S301: Obtain a first electronic map, where the first electronic map includes a first road junction, and the first road junction includes a first upstream lane and a first downstream lane.

In this embodiment, the first electronic map is an electronic map including the first road junction. The first road junction may be a road junction that is in a target zone and at which a lane line needs to be generated, and the first road junction may be one or more of a plurality of road junctions in the target zone. In this application, for ease of description, a road junction (namely, the first road junction) is used as an example to describe the electronic map generation method in this application. It should be understood that, in actual application, the vehicle control apparatus may further simultaneously generate lane lines at at least two or more road junctions in the target zone based on an electronic map generation method that is the same as or similar to that in this application. Optionally, when the vehicle control apparatus needs to manage passing of vehicles at two or more road junctions, the vehicle control apparatus may alternatively preferentially generate a lane line at a road junction with a higher management priority based on management priorities of the road junctions (where the management priority of the road junction may be used as a piece of attribute information of the road junction), to reduce control difficulty and complexity.

It should be noted that, in embodiments of this application, a lane may also be referred to as a driving line or a vehicle lane, and is a road used for a vehicle to pass through. One road may include one or more lanes. In addition, different lanes cannot physically overlap with each other.

It may be understood that, at a road junction, there is usually a lane for driving into the road junction or a lane for driving out of the road junction. The lane for driving into the road junction may also be referred to as an upstream lane at the road junction, and the lane for driving out of the road junction may also be referred to as a downstream lane at the road junction. In this embodiment, the first upstream lane is one of at least one upstream lane associated with the road junction, and the first downstream lane is one of at least one downstream lane associated with the road junction.

It should be noted herein that a quantity of upstream lanes or a quantity of downstream lanes is not limited in embodiments of this application. For example, at the first road junction in this embodiment, there are four upstream lanes associated with the first road junction, and there are two downstream lanes associated with the first road junction.

S302: Generate M virtual lane lines between the first upstream lane and the first downstream lane, where the M virtual lane lines are used to update the first electronic map, and M is an integer greater than or equal to 1.

It may be understood that the autonomous vehicle can travel from the first upstream lane to the first downstream lane only by passing through a consecutive lane line. However, generally, there is no physically visible lane line at a road junction. More specifically, there is no consecutive lane line between an upstream lane and a downstream lane that are associated with the road junction. In this case, driving of the autonomous vehicle is affected. Therefore, in this embodiment, the consecutive virtual lane line is generated between the first upstream lane and the first downstream lane that are associated with the first road junction in the first electronic map, so that the autonomous vehicle can pass through the first road junction.

In an example, the generating M virtual lane lines between the first upstream lane and the first downstream lane may include generating the M virtual lane lines between the first upstream lane and the first downstream lane based on at least one of a preset vehicle motion characteristic and a driving environment.

It may be understood that, when the virtual lane line is generated between the first upstream lane and the first downstream lane, the generated virtual lane line should meet the preset vehicle motion characteristic (for example, the preset vehicle motion characteristic may be represented via a kinematic model or a dynamic characteristic of the vehicle), so that the vehicle can travel from the first upstream lane to the first downstream lane. Otherwise, if the generated virtual lane line does not meet the preset vehicle motion characteristic, an unavailable virtual lane line is generated between the first upstream lane and the first downstream lane, and the generated unavailable virtual lane line affects passing of the autonomous vehicle at the first road junction. Further, when there are more autonomous vehicles, a gridlock risk is increased.

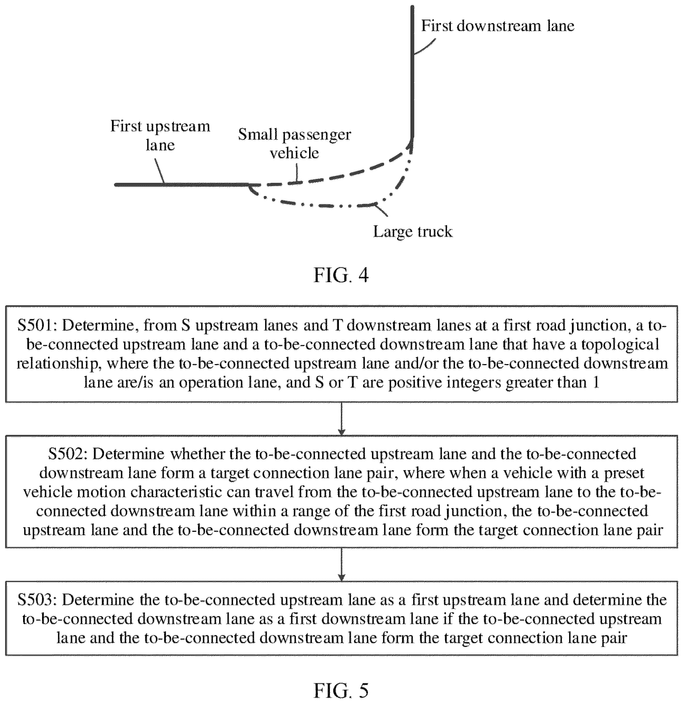

Further, because different types of vehicles have different vehicle motion characteristics, virtual lane lines generated between the first upstream lane and the first downstream lane are different. For example, a small passenger vehicle and a large truck are used as an example. FIG. 4 is a diagram of connection lane lines according to this embodiment. The small passenger vehicle may complete turning from the first upstream lane to the first downstream lane along a dashed line path in FIG. 4. However, the large truck can complete turning from the first upstream lane to the first downstream lane only along a dotted line in FIG. 4, because a vehicle motion characteristic of the large truck requires a larger turning radius.

Therefore, in this implementation, when the virtual lane line is generated between the first upstream lane and the first downstream lane, a plurality of vehicle motion characteristics are further considered, so that a vehicle corresponding to any one of the plurality of vehicle motion characteristics travels from the first upstream lane to the first downstream lane.

It should be noted that a specific form of each of the M generated virtual lane lines is not limited in this embodiment. For example, each virtual lane line may be represented as one line, or may be represented as two or more lines.

During specific implementation, the vehicle control apparatus may obtain at least one vehicle motion characteristic in a plurality of manners. For example, the at least one vehicle motion characteristic may be represented via M vehicle kinematic models, and the M vehicle kinematic models may be received through an upper-layer application, or the M vehicle kinematic models may be preset in the vehicle control apparatus.

For example, Table 1 is a representation method of a vehicle kinematic model according to this embodiment.

**Table 1**

| Kinematic parameter name | Definition |
|---|---|
| length | Vehicle length |
| width | Vehicle width |
| lenFront | Distance from a front edge of a vehicle to a reference location of the vehicle |
| lenRear | Distance from a rear edge of the vehicle to the reference location of the vehicle |
| disFrontWheel | Distance from a front wheel axle of the vehicle to the reference location of the vehicle |
| disRearWheel | Distance from a rear wheel axle of the vehicle to the reference location of the vehicle |
| maxSteeringAngle | Maximum wheel steering angle |

As shown in Table 1, for example, parameter names that are defined for the vehicle and that are used to describe the vehicle kinematic model is shown, including the vehicle length (length), the vehicle width (width), the distance from the front edge of the vehicle to the reference location of the vehicle (lenFront), the distance from the rear edge of the vehicle to the reference location of the vehicle (lenRear), the distance from the front wheel axle of the vehicle to the reference location of the vehicle (disFrontWheel), the distance from the rear wheel axle of the vehicle to the reference location of the vehicle (disRearWheel), the maximum wheel steering angle (maxSteeringAngle), and the like. It should be noted herein that Table 1 is merely an example for describing the vehicle kinematic model and is not any limitation. During specific implementation, more or fewer kinematic parameter names may be further included. This is not limited in embodiments of this application.

In an implementation of determining the foregoing kinematic parameters, an operator may grade different vehicle models based on parameters such as sizes, wheel axle locations, and traveling modes of vehicles, and vehicle models belonging to a same grade use a same kinematic model. During specific implementation, the same kinematic model can adapt to all vehicle models of a same grade that meet a driving requirement.

It may be further understood that, when the autonomous vehicle needs to travel downhill from the first upstream lane to the first downstream lane, and a slope of the downhill is greater than a preset slope threshold, if the virtual connection lane line is generated between the first upstream lane and the first downstream lane, a safety accident of the autonomous vehicle may be caused. In addition, a quality of a road surface material directly affects a driving speed, transportation costs, driving safety, and the like of the autonomous vehicle. For example, a driving speed of the autonomous vehicle on an asphalt road surface is generally higher than a driving speed of the autonomous vehicle on a sandstone road surface. It may be understood that, if the road surface material is sandstone, a congestion phenomenon is more likely to occur when a quantity of autonomous vehicles is larger. Therefore, in this embodiment, when the M virtual lane lines are generated between the first upstream lane and the second upstream lane, an environment of driving from the first upstream lane to the first downstream lane is further considered. It should be noted herein that the slope and the road surface material are merely used as an example of the driving environment herein, but this does not constitute a limitation on this application. Selection may be performed based on a specific scenario.

According to the electronic map generation method provided in this embodiment, the M virtual lane lines can be generated between the first upstream lane and the first downstream lane, so that the vehicle can travel from the first upstream lane to the first downstream lane, to pass through the first road junction. Further, in the method of this application, when the M virtual lane lines are generated between the first upstream lane and the first downstream lane, the preset vehicle motion characteristic and the driving environment are further considered. This reduces a risk that the autonomous vehicle cannot travel from the first upstream lane to the first downstream lane based on the virtual lane lines generated between the first upstream lane and the first downstream lane, reduces impact on a passage rate at the first road junction, and further reduces a risk of a gridlock phenomenon occurring at the first road junction.

In this embodiment, after the M virtual lane lines are generated between the first upstream lane and the first downstream lane, the M virtual lane lines may be further displayed.

In an example, at least two of the M lane lines have different colors. For example, it is assumed that five lane lines are generated between the first upstream lane and the first downstream lane, the five lane lines may be respectively represented in red, orange, blue, green, and purple.

In another example, at least two of the M lane lines have different virtual-real degrees. For example, it is assumed that two lane lines are generated between the first upstream lane and the first downstream lane, one lane line corresponds to a kinematic model of a small passenger vehicle, and the other lane line corresponds to a kinematic model of a large truck. In this case, a connection lane line corresponding to the kinematic model of the small passenger vehicle may be represented by a dashed line, and a connection lane line corresponding to the kinematic model of the large truck may be represented by a solid line.

In still another example, at least two of the M lane lines have different thicknesses. For example, one lane line corresponds to a kinematic model of a small passenger vehicle, and the other lane line corresponds to a kinematic model of a large truck. In this case, a connection lane line corresponding to the kinematic model of the small passenger vehicle may be represented by a thin line, and a connection lane line corresponding to the kinematic model of the large truck may be represented by a thick line.

It should be noted herein that the foregoing three examples do not constitute a limitation on embodiments of this application. For example, the presentation manner in the first example may be further combined with the presentation manner in the second example or the presentation manner in the third example, or the presentation manner in the first example, the presentation manner in the second example, and the presentation manner in the third example may be combined together.

It may be understood that, the M virtual lane lines are displayed, so that the vehicle control apparatus can quickly determine the M virtual lane lines, thereby quickly implementing functions such as unified scheduling, planning, and guidance of automated vehicles. In addition, the vehicle control apparatus may output the M generated virtual lane lines to the operator in a manner of displaying the M virtual lane lines, so that the operator can perform a next operation. For example, the operator may store the M generated virtual lane lines, or may re-enter an instruction to the vehicle control apparatus to perform an operation on the M virtual lane lines. For example, the operator may input an instruction for deleting a virtual lane line in the M virtual lane lines.

Optionally, after the M virtual lane lines are generated between the first upstream lane and the first downstream lane, first information may be further output. The first information indicates information about at least one of the M virtual lane lines. The information about the at least one virtual lane line includes at least one of the following: a right of way of the at least one virtual lane line, a type of a vehicle to which the at least one virtual lane line is applicable, and physical information of the at least one virtual lane line.

The right of way may be used as an evaluation parameter, and is used to evaluate a priority of the virtual lane line. It may be understood that a higher right of way of the virtual lane line indicates a higher priority of the virtual lane line when the vehicle travels through the first road junction based on the virtual lane line. In a possible implementation, the right of way of the virtual lane line may be obtained through calculation based on right of way information configured for the first road junction, the first upstream lane and the first downstream lane at the first road junction, and the like. During specific implementation, a right of way of the first upstream lane and a right of way of the first downstream lane may be dynamically configured based on importance of an operation task type, or may be dynamically configured by the operator based on experience of the operator.

The physical information of the at least one virtual lane line may indicate, for example, a length of the at least one virtual lane line, curvature of the at least one virtual lane line, or the like.

In this embodiment, after generating the M virtual lane lines between the first upstream lane and the first downstream lane, the vehicle control apparatus may further output related information of the at least one generated virtual lane line to the operator by outputting the first information, for example, the right of way, the applicable vehicle type, and the physical information that are used to describe the at least one virtual lane line, so that the system operator can perform a next operation. For example, the system operator may store the at least one generated virtual lane line, or may re-enter an instruction to the vehicle control apparatus to perform an operation on the at least one virtual lane line.

It may be understood that, a prerequisite of generating the M lane lines between the first upstream lane and the first downstream lane is that the first upstream lane is selected from at least one upstream lane related to the first road junction, and the first downstream lane is selected from at least one downstream lane related to the first road junction.

With reference to FIG. 5 to FIG. 11, the following describes a method for determining the first upstream lane and the first downstream lane.

FIG. 5 is a schematic flowchart of a method for determining a first upstream lane and a first downstream lane according to an embodiment of this application. As shown in FIG. 5, the method in this embodiment includes S501, S502, and S503.

S501: Determine, from S upstream lanes and T downstream lanes at a first road junction, a to-be-connected upstream lane and a to-be-connected downstream lane that have a topological relationship, where the to-be-connected upstream lane and/or the to-be-connected downstream lane are/is an operation lane, and S or T is a positive integer greater than 1.

The topological relationship indicates an association relationship between an upstream lane and a downstream lane that are associated with the first road junction.

It should be understood that, in embodiments of this application, the association relationship between the upstream lane and the downstream lane that are associated with the first road junction may be configured based on an application requirement. In addition, in different application requirements or application scenarios, the upstream lane and the downstream lane may be further flexibly updated, adjusted, and the like. For example, when a quantity of tasks decreases, the topological relationship may be updated based on an actual task requirement.

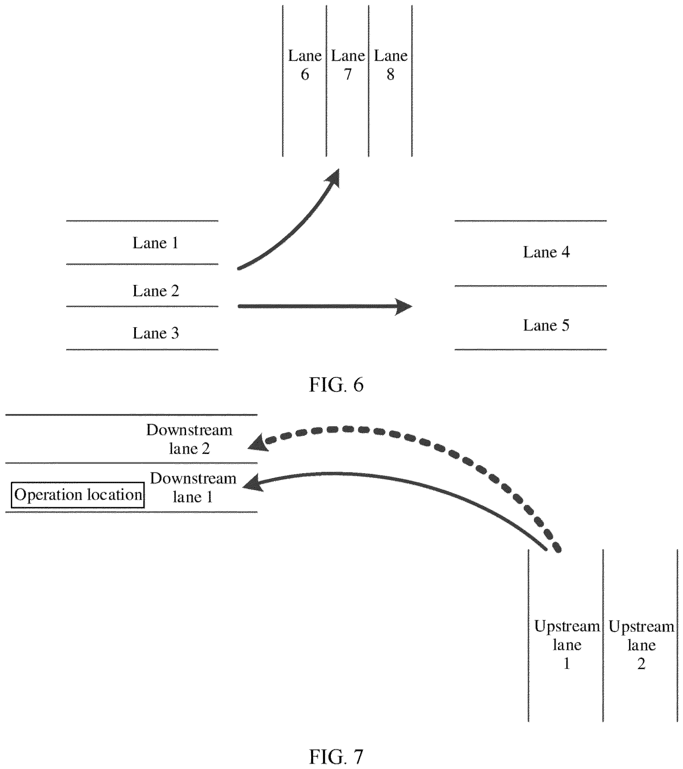

In a possible implementation, the topological relationship may be presented in a diagram of a road network structure. For example, FIG. 6 is a diagram of a structure of a lane topological relationship according to an embodiment of this application. Refer to FIG. 6. In this embodiment, for example, a road junction formed by a lane 1, a lane 2, a lane 3, a lane 4, a lane 5, a lane 6, a lane 7, and a lane 8 is referred to as the first road junction. An arrow shown in the figure represents a direction in which vehicles can travel. Specifically, in this example, the vehicles may travel from the lane 1, the lane 2, and the lane 3 to the lane 6, the lane 7, and the lane 8, or may travel from the lane 1, the lane 2, and the lane 3 to the lane 4 and the lane 5. In other words, in this example, the lane 1, the lane 2, and the lane 3 are upstream lanes at the first road junction, and the lane 4, the lane 5, the lane 6, the lane 7, and the lane 8 are downstream lanes at the first road junction. Further, a topological relationship between the upstream lanes and the downstream lanes that are associated with the first road junction may be determined based on the diagram of the road network structure. For example, based on the road network structure shown in FIG. 6, a vehicle control apparatus may determine that the downstream lanes that have a topological relationship with the lane 1 are the lane 4, the lane 5, the lane 6, the lane 7, and the lane 8. It should be noted herein that the upstream lanes and the downstream lanes in the embodiment shown in FIG. 6 are merely an example, and do not constitute a limitation on this application. For example, more upstream lanes and more downstream lanes may be alternatively included.

The topological relationship may be stored in a local database of the vehicle control apparatus. When S501 is implemented, the vehicle control apparatus may obtain the topological relationship from the local database. Alternatively, the topological relationship may be stored in another device. When S501 is implemented, the vehicle control apparatus may obtain the topological relationship from the another device. A manner of obtaining the topological relationship is not limited in embodiments of this application.

It should be noted herein that with the rapid development of technologies, vehicle autonomous driving technologies are becoming more popular. A cooperative driving control technology between a plurality of vehicles has been gradually applied to commercial vehicle production environments such as a port and an industrial park to replace conventional manual driving control and improve overall operation efficiency. In these production environments, there are usually two common task requirements. A first requirement is to allocate a production device to a vehicle, so that the vehicle moves to a location of the production device, and executes a corresponding operation task based on a production resource corresponding to the production device. A second requirement is to allocate a separate operation location to the vehicle, so that the vehicle completes a corresponding operation task at the operation location. In this embodiment, a lane that includes a production device and an operation location of a vehicle is referred to as an operation lane.

It may be understood that, in this commercial vehicle production environment, for a lane including a production device or an operation location, a corresponding case in which a vehicle travels to the lane including the production device or the operation location to perform an operation exists. In addition, in scenarios such as a port or an industrial park, a most important indicator is to improve vehicle operation efficiency, that is, based on a path as short as possible, an autonomous vehicle travels out of an upstream lane having an operation location or a production device of the vehicle, or an autonomous vehicle travels into a downstream lane having an operation location or a production device of the vehicle. Therefore, to meet a production requirement and implement a vehicle production operation, when a virtual lane line in the first road junction is generated, theoretically, there should be a virtual lane line that can be connected to the operation lane.

Therefore, in this embodiment, the to-be-connected upstream lane and the to-be-connected downstream lane that have the topological relationship are first determined from the S upstream lanes and the T downstream lanes at the first road junction. At least one of the to-be-connected upstream lane and the to-be-connected downstream lane is the operation lane. In other words, in this embodiment, the operation lane is preferentially considered as the to-be-connected lane, to meet a production requirement.

S502: Determine whether the to-be-connected upstream lane and the to-be-connected downstream lane form a target connection lane pair, where when a vehicle having a preset vehicle motion characteristic can travel from the to-be-connected upstream lane to the to-be-connected downstream lane within a range of the first road junction, the to-be-connected upstream lane and the to-be-connected downstream lane form the target connection lane pair.

It may be understood that the vehicle having the preset vehicle motion characteristic can travel from the upstream lane to the downstream lane based on a virtual lane line generated between an upstream lane and a downstream lane. In other words, the generated virtual lane line should meet a kinematic or dynamic characteristic of the vehicle.

Therefore, when the to-be-connected upstream lane and the to-be-connected downstream lane in step S501 are determined, whether the vehicle having the preset vehicle motion characteristic can travel from the to-be-connected upstream lane to the to-be-connected downstream lane within a range of the first road junction needs to be determined. Only when the vehicle having the preset vehicle motion characteristic can travel from the to-be-connected upstream lane to the to-be-connected downstream lane within the range of the first road junction, then it is determined that the virtual lane line can be generated between the to-be-connected upstream lane and the to-be-connected downstream lane.

In this embodiment, the to-be-connected upstream lane and the to-be-connected downstream lane that can generate the virtual lane line are also referred to as the target connection lane pair.

S503: Determine the to-be-connected upstream lane as the first upstream lane and determine the to-be-connected downstream lane as the first downstream lane if the to-be-connected upstream lane and the to-be-connected downstream lane form the target connection lane pair.

For example, FIG. 7 is a diagram of a structure of virtual lane lines according to an embodiment of this application. In this example, it is assumed that an upstream lane 1 has a preset topological relationship with both a downstream lane 1 including an operation location and a downstream lane 2, and an upstream lane 2 also has a preset topological relationship with both the downstream lane 1 including the operation location and the downstream lane 2.

As shown in FIG. 7, the downstream lane 1 at a road junction includes the operation location. Therefore, the downstream lane 1 is an operation lane. In this case, in an upstream lane (namely, the upstream lane 1 and the upstream lane 2 in this example) that has a topological relationship with the operation lane, if there is an upstream lane that can enable a vehicle that meets a preset vehicle motion characteristic to directly travel from the upstream lane 1 to the operation lane, the upstream lane may be used as the first upstream lane. For example, if the vehicle that meets the preset vehicle motion characteristic can directly travel from the upstream lane 1 to the operation lane, the upstream lane 1 is the first upstream lane. Further, if the vehicle that meets the preset vehicle motion characteristic can also directly travel from the upstream lane 2 to the operation lane, the upstream lane 2 is also the first upstream lane. Correspondingly, a virtual lane line (as shown by a solid line in FIG. 7) is generated between the upstream lane 1 and the operation lane, and a virtual lane line is generated between the upstream lane 2 and the operation lane.

In this embodiment, an upstream lane including a production device or an operation location of a vehicle is used as the first upstream lane, and/or a downstream lane including a production device or an operation location of a vehicle is used as the first downstream lane.

It may be understood that, after the upstream lane including the production device or the operation location of the vehicle is used as the first upstream lane, and/or the downstream lane including the production device or the operation location of the vehicle is used as the first downstream lane, the virtual lane line generated between the first upstream lane and the first downstream lane can enable the autonomous vehicle to reach a lane including a production device or an operation location at minimum travel costs (for example, as soon as possible), to improve operation efficiency. For example, based on a requirement of a user, the vehicle may be required to arrive at the lane including the production device or the operation location as soon as possible, or the vehicle may arrive at the lane including the production device or the operation location by considering aspects such as ensuring easy driving of the vehicle in terms of vehicle safety and control (for example, selecting a maximum turning radius during turning)

It may be further understood that, after the to-be-connected upstream lane and the to-be-connected downstream lane that have a topological relationship are determined from the S upstream lanes and the T downstream lanes at the first road junction, a case in which the vehicle having the preset vehicle motion characteristic cannot travel from the to-be-connected upstream lane to the to-be-connected downstream lane may alternatively occur. In other words, a virtual lane line that meets the preset vehicle motion characteristic cannot be generated between the to-be-connected upstream lane and the to-be-connected downstream lane, that is, a virtual lane line that meets a production requirement cannot be generated. In this application, this problem is resolved by updating a to-be-connected lane to an adjacent lane of an operation lane, updating a non-operation lane to a to-be-connected lane, and expanding a range of a road junction.

In an implementation, if the to-be-connected upstream lane and the to-be-connected downstream lane do not form the target connection lane pair, the to-be-connected downstream lane is updated to an adjacent lane of the to-be-connected downstream lane, and/or the to-be-connected upstream lane is updated to an adjacent lane of the to-be-connected upstream lane; and step S501, step S502, and step S503 are re-performed.

In this embodiment, when the virtual lane line that meets the preset vehicle motion characteristic cannot be generated between the to-be-connected upstream lane and the to-be-connected downstream lane, that is, a virtual lane line that can be directly connected to the operation lane cannot be generated, the to-be-connected downstream lane may be updated to the adjacent lane of the to-be-connected downstream lane, and/or the to-be-connected upstream lane may be updated to the adjacent lane of the to-be-connected upstream lane.

It should be noted herein that the adjacent lanes in this embodiment may be directly adjacent or indirectly adjacent. This is not limited in this embodiment.

It may be understood that, in different scenarios, when whether the downstream lane 2 can be used as a to-be-connected downstream lane connected to the upstream lane 1 is determined, in addition to determining whether the vehicle that meets the preset vehicle motion characteristic can travel from the upstream lane 1 to the downstream lane 2, whether the vehicle can change a lane from the downstream lane 2 to the operation lane and whether a preset rule is met needs to be considered.

FIG. 7 is still used as an example for description. For example, if the vehicle that meets the preset vehicle motion characteristic cannot directly travel from the upstream lane 1 to the operation lane, the downstream lane 2 adjacent to the operation lane may be used as the to-be-connected downstream lane. Further, after it is determined that the upstream lane 1 and the downstream lane 2 are the to-be-connected upstream lane and the to-be-connected downstream lane, step S502 and step S503 continue to be performed, that is, whether the vehicle that meets the preset vehicle motion characteristic can travel from the upstream lane 1 to the downstream lane 2 is determined. If the vehicle can travel from the upstream lane 1 to the downstream lane 2, the upstream lane 1 is used as the first upstream lane, and the downstream lane 2 is used as the first downstream lane, a virtual lane line is generated between the upstream lane 1 and the downstream lane 2.

It may be understood that, by updating the to-be-connected downstream lane to an adjacent lane of the operation lane, the vehicle can change a lane from the adjacent lane to the operation lane to meet a production requirement, and passing efficiency of a plurality of autonomous vehicles can be improved. For example, the adjacent lane may be a passing lane directly adjacent to the operation lane. In this case, for some autonomous vehicles that may not need to perform an operation but only pass through the road junction, the autonomous vehicles may travel to the passing lane adjacent to the operation lane, to improve passing efficiency of the autonomous vehicles.

In another implementation, if the to-be-connected upstream lane and the to-be-connected downstream lane do not form the target connection lane pair, the vehicle control apparatus may further update lane type information of the first road junction, where the updating lane type information of the first road junction includes at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane. Then, step S501, step S502, and step S503 are re-performed.

In an example, third information may be received to indicate to update the lane type information of the first road junction.

The lane type information indicates whether a lane is an operation lane or a non-operation lane.

In this embodiment, when the virtual lane line that meets the preset vehicle motion characteristic cannot be generated between the to-be-connected upstream lane and the to-be-connected downstream lane, a type of a lane is adjusted to re-determine the to-be-connected upstream lane and the to-be-connected downstream lane, to generate a virtual lane line that meets a production requirement.

FIG. 7 is still used as an example for description. For example, if the vehicle that meets the preset vehicle motion characteristic cannot directly travel from the upstream lane 1 to the operation lane, the operation location on the downstream lane 1 may be adjusted to the downstream lane 2. In this case, the upstream lane 1 and the downstream lane 2 that includes the operation location form a to-be-connected lane pair. Further, after the upstream lane 1 and the downstream lane 2 are determined, step S502 and step S503 continue to be performed, that is, whether the vehicle that meets the preset vehicle motion characteristic can travel from the upstream lane 1 to the downstream lane 2 including the operation location is determined. If the vehicle can travel from the upstream lane 1 to the downstream lane 2 including the operation location, the upstream lane 1 is used as the first upstream lane, and the downstream lane 2 including the operation location is used as the first downstream lane, a virtual lane line is generated between the upstream lane 1 and the downstream lane 2 including the operation location, so as to generate a virtual lane line that meets a production requirement. It should be noted herein that the changing the downstream lane 1 to the non-operation lane and the changing the downstream lane 2 to the operation lane are merely an example, and do not constitute a limitation on this application. For example, to generate a virtual lane line that meets a production requirement, a new upstream lane or a new downstream lane may be further added until the virtual lane line that meets the production requirement can be generated.

In still another implementation, if the to-be-connected upstream lane and the to-be-connected downstream lane do not form the target connection lane pair, the vehicle control apparatus may further partition, as the range of the first road junction, a target range in which at least one of the S upstream lanes and the T downstream lanes is adjacent to the first road junction, and then re-perform step S501, step S502, and step S503 based on the first road junction obtained through the range partition.

In an example, the vehicle control apparatus may receive fifth information, where the fifth information indicates the target range in which the at least one lane is adjacent to the first road junction. A specific value of the target range is not limited in this embodiment. For example, the value may be 2 meters, 3 meters, or another value, and may be determined based on a specific scenario or based on an empirical value.

In this embodiment, the range of the first road junction is expanded, so that the generated virtual lane line can meet a production requirement.

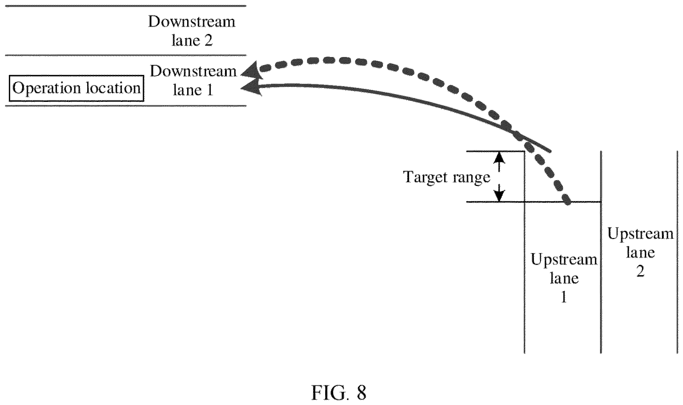

For example, FIG. 8 is a diagram of a structure of virtual lane lines according to another embodiment of this application. In this example, it is assumed that an upstream lane 1 has a preset topological relationship with both a downstream lane 1 including an operation location and a downstream lane 2, and an upstream lane 2 also has a preset topological relationship with both the downstream lane 1 including the operation location and the downstream lane 2.

As shown in FIG. 8, if the downstream lane 1 at a road junction includes the operation location, the downstream lane 1 is an operation lane, and upstream lanes that have a topological relationship with the downstream lane 1 are the upstream lane 1 and the upstream lane 2. In this case, if a vehicle that meets a preset vehicle motion characteristic cannot directly travel from the upstream lane 1 to the downstream lane 1, a junction range between the upstream lane 1 and the downstream lane 1 may be further expanded. For example, as shown in FIG. 8, a target range in which the upstream lane 1 is adjacent to the road junction may be partitioned as a range of the road junction. In this case, after a target range region of the upstream lane 1 is partitioned as the road junction, whether the vehicle that meets the preset vehicle motion characteristic can directly travel from the upstream lane 1 to the downstream lane 1 (that is, step S502 is performed) may be re-determined. When the vehicle can directly travel from the upstream lane 1 on which target range partition is performed to the downstream lane 1, a virtual lane line is further generated between the upstream lane 1 on which target range region partition is performed and the downstream lane 1, as shown by a dashed line in FIG. 8.

It should be noted herein that, as shown in FIG. 8, partitioning the target range adjacent to the upstream lane 1 as the range of the first road junction is merely an example, and does not constitute a limitation on this application. For example, a target range adjacent to the downstream lane 1 may be alternatively partitioned as the range of the first road junction, or the target range adjacent to the upstream lane 1 and a target range adjacent to the downstream lane 1 may be simultaneously partitioned as the range of the first road junction.

In a commercial vehicle production environment, there are usually a plurality of operation lanes. In this case, a plurality of virtual lane lines need to be generated at the first road junction, to enable an autonomous vehicle to quickly complete an operation. Therefore, in this embodiment, a quantity of target connection lane pairs that need to be formed by the S upstream lanes and the T downstream lanes may be further set based on an actual operation requirement. Then, when the quantity of target connection lane pairs that are formed by the S upstream lanes and the T downstream lanes is less than or equal to a preset quantity threshold, a preset range in which at least one of the S upstream lanes and the T downstream lanes is adjacent to the first road junction is partitioned as the range of the first road junction.

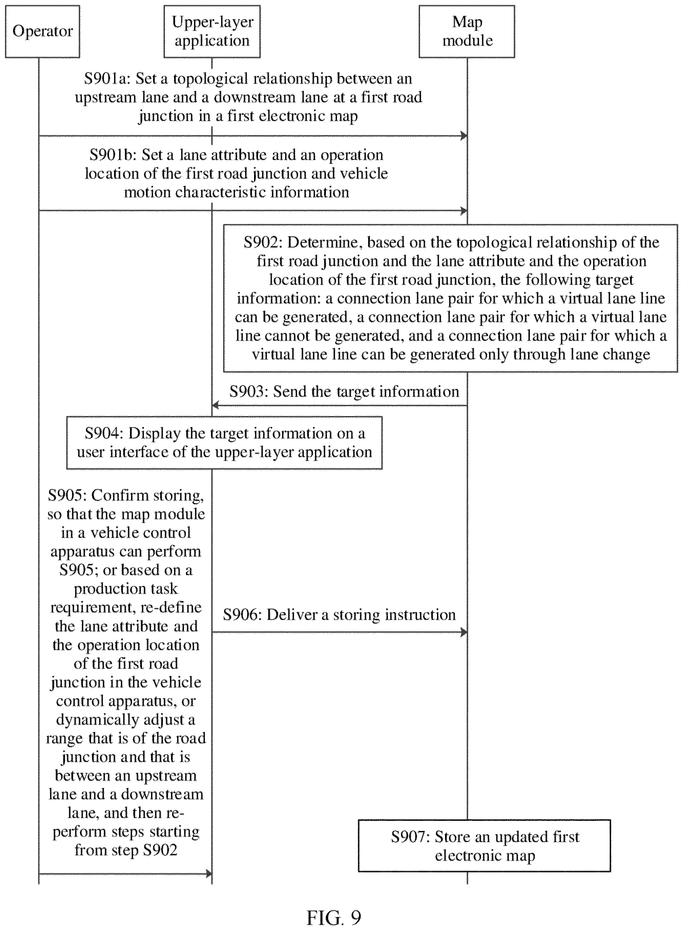

The foregoing describes a method for generating a virtual lane line that can meet a production requirement in this embodiment. With reference to a method flowchart shown in FIG. 9, the following describes implementation details of generating the virtual lane line that meets the production requirement in this application.

Refer to FIG. 9. The electronic map generation method may include the following steps.

S901: An operator configures a vehicle control apparatus through an upper-layer application, including but not limited to: defining upstream and downstream topological relationships of a first road junction, and setting lane type information, an operation location, and a vehicle motion characteristic.

In an embodiment of this application, for example, the operator may set a parking location on a map of a target region through the upper-layer application, define a parking location attribute and a topological relationship, and define guidance rule information that needs to be followed when a virtual lane line is generated. The upper-layer application may complete unified configuration of the information by using one configuration operation, or may implement configuration of different information in different configuration operations, or may implement configuration of different modules in the vehicle control apparatus by using different signaling. An implementation of this specific configuration process is not limited in embodiments of this application.

For example, during implementation, S901 may include the following steps.

S901a: Define a topological relationship of the first road junction.

For the topological relationship of the first road junction, refer to the descriptions in the foregoing embodiments of this application. Details are not described herein again.

S901b: Define a lane attribute and the operation location of the first road junction, and related vehicle motion characteristic information (for example, a kinematic model of a vehicle may be defined).

For example, the lane attribute indicates whether a lane is used for a production requirement, and the operation location is used to indicate whether a lane includes a parking location used by a vehicle to perform an operation.

S902: A map module in the vehicle control apparatus determines, based on the topological relationship of the first road junction and the lane attribute and the operation location of the first road junction, the following target information: a connection lane pair for which a virtual lane line can be generated, a connection lane pair for which a virtual lane line cannot be generated, and a connection lane pair for which a virtual lane line can be generated only through lane change.

In this embodiment, for detailed descriptions of the connection lane pair, refer to the descriptions in the embodiment shown in FIG. 5 in this application. Details are not described herein again.

The connection lane pair for which a virtual lane line can be directly generated indicates a lane pair for which a virtual lane line that meets a production requirement and that can meet a vehicle motion characteristic can be directly generated. The connection lane pair for which a virtual lane line can be generated only through lane change indicates a lane pair through which a vehicle can reach an operation lane only by changing a lane to perform a production operation. The connection lane pair for which a virtual lane line cannot be generated indicates a lane pair for which a virtual lane line meeting a vehicle motion characteristic cannot be generated and through which a vehicle cannot travel to an operation lane by changing a lane.

S903: The vehicle control apparatus sends the target information to a user interface of the upper-layer application by using the map module.

S904: The vehicle control apparatus displays the target information on the user interface of the upper-layer application.

In other words, the connection lane pair for which a virtual lane line can be directly generated, the connection lane pair for which a virtual lane line cannot be generated, and the connection lane pair for which a virtual lane line can be generated only through lane change are displayed through the user interface of the upper-layer application.

S905: The operator may select a next operation based on related information displayed on the user interface of the upper-layer application and a production task requirement.

For example, during implementation, the operator may confirm storing, so that the upper-layer application in the vehicle control apparatus can perform S906. Alternatively, based on the production task requirement, the lane attribute and the operation location of the first road junction are re-defined in the vehicle control apparatus, or a range that is of the road junction and that is between an upstream lane and a downstream lane is dynamically adjusted, and then steps are re-performed starting from step S902.

S906: The upper-layer application delivers a storing instruction to the map module.

S907: Store an updated first electronic map.

In this embodiment, the vehicle control apparatus generates, based on configuration information entered by the operator in the vehicle control apparatus, a virtual connection lane that meets a production requirement. In addition, the operator may change an operation lane or an operation location based on the target information displayed on the display interface of the upper-layer application and the production requirement, to finally generate a virtual connection lane that can meet the production requirement.

The foregoing describes a method for generating a virtual connection lane by considering a production requirement, so that the generated virtual lane line can meet the production requirement, to further improve operation efficiency.

It may be understood that, when virtual lane lines at the first road junction are generated, more virtual lane lines at the first road junction indicate that a cloud server is more flexible in performing unified scheduling, planning, and guidance on a plurality of vehicles at the first road junction. Therefore, in this application, in addition to generating the virtual lane line that can meet the production requirement, some optional virtual lane lines may be further generated. This increases selectability of selecting a virtual lane line when the vehicle passes through the first road junction, and improves flexibility of the cloud server in performing unified scheduling, planning, and guidance on a plurality of vehicles at the road junction.

Similar to that in a principle of generating the virtual lane line that meets the production requirement, a prerequisite of generating the optional virtual lane line is also that a first upstream lane and a first downstream lane between which the optional virtual lane line can be generated need to be selected from at least one upstream lane and at least one downstream lane that are related to the first road junction.

In an implementation, a method for determining the optional virtual lane line is as follows: obtaining K lane pairs from S upstream lanes and T downstream lanes, where each of the K lane pairs includes one of the S upstream lanes and one of the T downstream lanes, and there is a preset topological relationship between the upstream lane and the downstream lane in each lane pair; determining a connection priority of each lane pair; and determining the first upstream lane and the first downstream lane based on the connection priority of each lane pair.

It may be understood that each finally generated virtual lane line is connected to one upstream lane and one downstream lane. Generally, different priorities may exist between upstream lanes or between downstream lanes. For example, a priority of an important lane (for example, an emergency lane, a fire lane, or a main production lane) is higher than a priority of a common lane. Further, the K lane pairs determined based on the S upstream lanes and the T downstream lanes also have different connection priorities.

Therefore, in this embodiment, it is determined, based on the connection priority of each lane pair, that an optional virtual lane line can be generated.

For example, the S upstream lanes and the T downstream lanes may form three lane pairs, and the three lane pairs correspond to different priorities. For example, in the three lane pairs, a first lane pair has a highest priority, a second lane pair has a second highest priority, and a third lane pair has a lowest priority. In this embodiment, it may be preferentially considered that an upstream lane in the first lane pair is used as the first upstream lane, a downstream lane in the first lane pair is used as the first downstream lane, and a virtual lane line is generated between the first upstream lane and the first downstream lane. Then, it may be considered that an upstream lane in the second lane pair is used as the first upstream lane, a downstream lane in the second lane pair is used as the first downstream lane, and a virtual lane line is generated between the first upstream lane and the first downstream lane.

During specific implementation, the connection priority of each lane pair may be determined based on a preset right of way of the upstream lane and a preset right of way of the downstream lane in each lane pair.

The preset right of way of the upstream lane may be used to evaluate a passing priority of a vehicle on an upstream lane at the road junction. In an example, a preset right of way of at least one upstream lane at the road junction may have a same value. In another example, the preset right of way of the at least one upstream lane at the road junction may have a different value. Generally, a right of way of an important lane (for example, an emergency lane, a fire lane, or a main production road) may be greater than a right of way of a common lane.

The preset right of way of the downstream lane may be used as an evaluation parameter, and is used to determine a passing priority, at the road junction, of a vehicle that is going to a downstream lane. In an example, a preset right of way of at least one downstream lane at the road junction may have a same value. In another example, the right of way of the at least one downstream lane at the road junction may have a different value. Generally, a right of way of an important road (for example, an emergency lane, a fire lane, or a main production road) may be greater than a right of way of a common road.

It may be understood that a right of way parameter used to describe a lane describes importance of the lane. Correspondingly, a higher preset right of way of the upstream lane and a higher preset right of way of the downstream lane indicate a higher priority of a virtual lane line corresponding to the upstream lane and the downstream lane. Therefore, during junction passage management, a vehicle that moves from a lane with a higher right of way to the junction and/or a vehicle that moves from the junction to a lane with a higher right of way can preferentially pass.

It should be noted herein that the preset right of way of the upstream lane and/or the preset right of way of the downstream lane may be dynamically configured based on actual conditions of the first road junction and the upstream/downstream lane at the first road junction and a production requirement.

For example, in an implementation, the preset right of way is determined based on at least one of the following information: a service priority, a lane change association relationship, or a preset driving rule.

In some specific scenarios, some lanes may be specially disposed to carry important services, to complete a production task. It may be understood that, compared with a vehicle on a lane carrying some common services, a vehicle on a lane carrying an important service should preferentially pass, to improve production efficiency. Therefore, in this embodiment, when a right of way of a lane is specifically determined, importance of a service carried on the lane is further considered. For example, there are two upstream lanes in an upstream of the first road junction. One of the two upstream lanes carries an important service, and the other carries a common service. In this case, a vehicle on the lane carrying the important service should be preferentially driven to the first road junction, that is, the lane carrying the important service corresponds to a higher right of way, to ensure operation efficiency.

In some commercial production environments, due to a production requirement, a part of a lane is used as a part specially for a vehicle to change a lane, so that when the vehicle travels to the junction, the vehicle may change a lane. Therefore, when a right of way of a lane is specifically determined, a lane change association relationship between lanes may be further considered. For example, when a lane change operation is performed, a value obtained by multiplying a value of a right of way of a lane by a coefficient may be assigned to a lane associated with the lane. For example, a downstream of the first road junction includes two upstream lanes, and basic weights of the two downstream lanes are 0.7 and 0.5. If vehicles on one of the two downstream lanes are allowed to change a lane to the other one of the two downstream lanes, and a coefficient is 0.3, it may be determined that comprehensive weights of the two downstream lanes are 0.7+0.3*0.5=0.85 and 0.5+0.3*0.5=0.71.

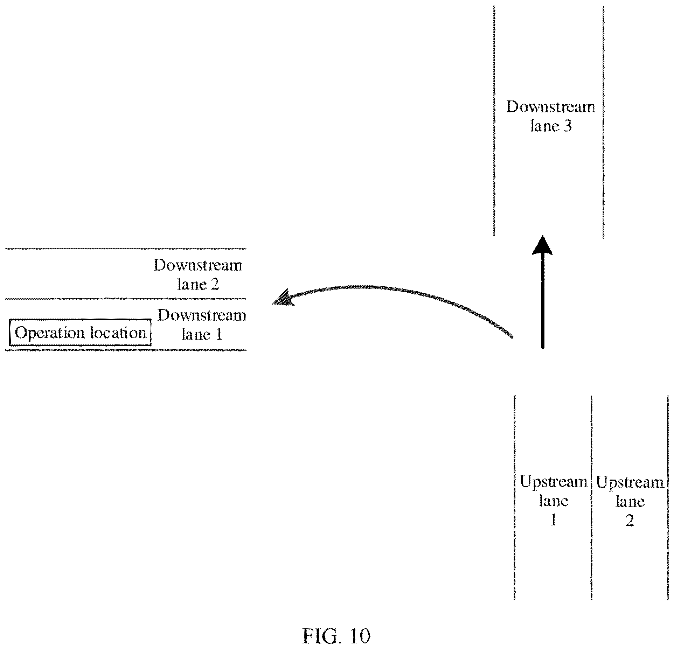

It may be understood that, in addition to the service priority and the lane change association relationship, the preset driving rule is also a factor that affects the virtual lane line generated at the first road junction. For example, FIG. 10 is used as an example for description. It is assumed that, based on a topological relationship, downstream lanes that have a topological relationship with an upstream lane 1 are a downstream lane 1, a downstream lane 2, and a downstream lane 3, and downstream lanes that have a topological relationship with an upstream lane 2 are also the downstream lane 1, the downstream lane 2, and the downstream lane 3. In this case, a lane pair formed includes: a lane pair including the upstream lane 1 and the downstream lane 1, a lane pair including the upstream lane 1 and the downstream lane 2, a lane pair including the upstream lane 1 and the downstream lane 3, a lane pair including the upstream lane 2 and the downstream lane 1, a lane pair including the upstream lane 2 and the downstream lane 2, and a lane pair including the upstream lane 1 and the downstream lane 3. In this case, if the following driving rule information exists: a left-turning vehicle gives way to a straight-ahead vehicle, that is, a vehicle that travels from the upstream lane 1 to the downstream lane 3 preferentially passes, it may be understood that, in this rule, a right of way corresponding to a virtual lane line generated between two lanes in a lane pair formed by the upstream lane 1 and the downstream lane 3 should be higher than a right of way corresponding to a virtual lane line generated between two lanes in another lane pair.

In another possible implementation, the connection priority of each lane pair may be alternatively determined based on a traffic flow from the upstream lane to the downstream lane in each lane pair.

It may be considered that the traffic flow from the upstream lane to the downstream lane can be used to indicate capacity information between the upstream lane and the downstream lane. It may be understood that if a traffic flow between a lane pair is greater, a virtual lane line between two lanes in the lane pair should be preferentially generated. In this way, vehicles traveling between the lane pair can be evacuated as soon as possible, so as to improve passing efficiency of the first road junction. Therefore, in this embodiment, when the connection priority of each lane pair is determined, traffic flows of the upstream lane and the downstream lane in the lane pair are further considered. It may be understood that a virtual lane line generated between two lanes in a lane pair with a larger traffic flow should correspond to a higher right of way.

It should be noted herein that the service priority, the lane change association relationship or the preset driving rule, and the traffic flow from the upstream lane to the downstream lane in each lane pair may be manually entered by the operator through the upper-layer application, or may be automatically obtained based on historical data. This is not limited in embodiments of this application.

It should be noted herein that, when the priority of the generated lane pair is determined, the service priority, the lane change association relationship, the preset driving rule, and the traffic flow from the upstream lane to the downstream lane in each lane pair are only used as an example, and more factors may be further considered. For example, a factor like a maximum capacity of the road junction may be further included to participate in any combination of the foregoing related information to determine the priority of the generated lane pair.

It should be noted herein that, in a process in which the vehicle control apparatus determines the first upstream lane and the downstream lane based on the connection priority of each lane pair, indication information that is entered by the operator through the upper-layer application may be further received, for example, information indicating to delete a previously generated virtual lane line or add a new virtual lane line, so that the vehicle control apparatus re-determines an optional virtual lane line based on the entered indication information.

For example, the determining the first upstream lane and the first downstream lane based on the connection priority of each lane pair includes: outputting sixth information, where the sixth information indicates the connection priority of each lane pair; receiving seventh information, where the seventh information indicates connection priorities of L lane pairs, and the L lane pairs include all or some of the K lane pairs; and determining the first upstream lane and the first downstream lane based on the seventh information.

In this example, after the K lane pairs from the S upstream lanes and the T downstream lanes are obtained and priorities of the K lane pairs are determined, the connection priorities of the K lane pairs may be output to the operator by outputting the sixth information. Correspondingly, the operator may obtain the connection priorities of the K lane pairs based on the sixth information, to perform a further operation. For example, the operator may indicate the connection priorities of the L lane pairs based on an actual production requirement. For example, a lane pair is added or a lane pair in the K lane pairs is deleted. Then, the vehicle control apparatus may determine the first upstream lane and the first downstream lane based on the priorities corresponding to the L lane pairs.

During specific implementation, after a connection priority of each of the L lane pairs is determined, a method for determining the first upstream lane and the first downstream lane includes: selecting a to-be-processed lane pair in descending order of connection priorities of unprocessed lane pairs in the L lane pairs; determining whether the to-be-processed lane pair and a lane pair for which a virtual lane line is generated meet a conflict determining rule; and if the to-be-processed lane pair and the lane pair for which the virtual lane line is generated meet the conflict determining rule, determining an upstream lane in the to-be-processed lane pair as the first upstream lane, and determining a downstream lane in the to-be-processed lane pair as the first downstream lane.

It should be understood that, when virtual lane lines at a road junction are generated, more virtual lane lines generated at the road junction indicate that the cloud server is more flexible in performing unified scheduling, planning, and guidance on a plurality of vehicles at the road junction. However, in addition, the more virtual lane lines generated at the road junction increase a gridlock risk. In view of this, in this embodiment, when some optional virtual lane lines are generated, a conflict determining rule is set to balance a conflict between flexibility of the optional virtual lane lines and gridlock.

For example, the conflict determining rule may be that an indicator of a conflict between a virtual lane line to be generated between two lanes in a lane pair and a previously generated virtual lane line is less than a conflict indicator quantity threshold. For example, a quantity of conflicts between the virtual lane line to be generated between the two lanes in the lane pair and the previously generated virtual lane line is less than a conflict quantity threshold. In view of this, when an optional virtual lane line is determined, the following method may be used: When a conflict between a virtual lane line between two lanes in a lane pair with a lower priority and an existing virtual lane line between two lanes in a lane pair with a higher priority reaches a conflict indicator threshold, the lane pair with a lower priority is skipped, and a virtual lane line is generated between two lanes in a lane pair with a far lower priority.

It should be noted herein that the conflict determining rule herein is merely an example, and may be alternatively changed to another conflict determining rule based on an actual scenario. This is not limited in this application.

In an implementable, the conflict determining rule may be entered by the operator through the upper-layer application.

It should be understood that, when the first upstream lane and the first downstream lane are determined based on the connection priority of each lane pair, it should be met that a vehicle having a preset vehicle motion characteristic can travel from the first upstream lane to the first downstream lane, that is, a virtual lane line generated between the first upstream lane and the first downstream lane can meet the preset vehicle motion characteristic.

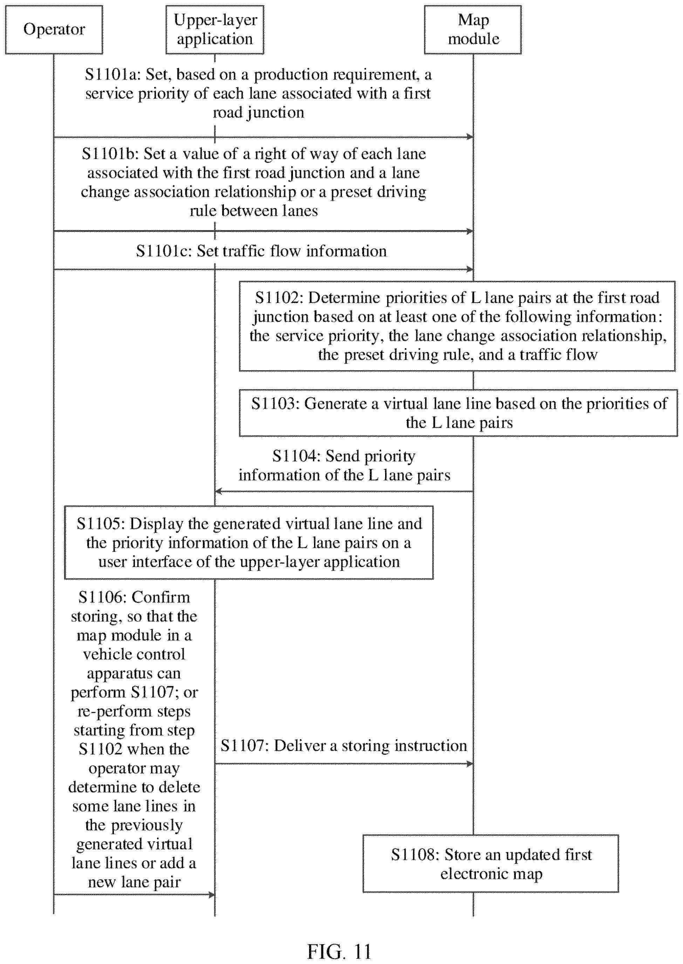

With reference to a method flowchart shown in FIG. 11, the following describes implementation details of an electronic map generation method in this application. In the method, a method for generating an optional virtual lane line at a first road junction is described in detail.

Refer to FIG. 11. The electronic map generation method may include the following steps.

S1101: An operator configures a vehicle control apparatus through an upper-layer application.

For example, during implementation, S1101 may include the following steps.

S1101a: Set, based on a production requirement, a service priority of each lane associated with a first road junction.

S 1101b: Set a value of a right of way of each lane associated with the first road junction and a lane change association relationship or a preset driving rule between lanes.

S1101c: Set traffic flow information.

The upper-layer application may complete unified configuration of the information by using one configuration operation, or may implement configuration of different information in different configuration operations, or may implement configuration of different modules in the vehicle control apparatus by using different signaling. An implementation of this specific configuration process is not limited in embodiments of this application.

S1102: A map module in the vehicle control apparatus determines priorities of L lane pairs at the first road junction based on at least one of the following information: the service priority, the lane change association relationship, the preset driving rule, and a traffic flow.

For detailed descriptions of the service priority, the lane change association relationship, the preset driving rule, the traffic flow, and the L lane pairs, refer to the descriptions in the foregoing embodiments. Details are not described herein again.

It may be understood that in the L lane pairs, a virtual lane line between two lanes in a lane pair with a higher priority should be preferentially generated.

S1103: The vehicle control apparatus generates a virtual lane line based on the priorities of the L lane pairs.

It should be understood that when a virtual connection lane is generated based on the priorities of the L lane pairs, the generated virtual lane line should meet a preset vehicle motion characteristic, and it should be ensured as far as possible that the generated virtual lane line does not conflict with a previously generated virtual lane line. During specific implementation, a conflict determining rule may be set (for example, an acceptable upper limit of conflicts is set, for example, a quantity of conflicts, a length of a conflict route, or a proportion). Then, when a conflict between a lane pair with a lower priority and a lane pair with a higher priority reaches an upper limit, the lane pair may be skipped, and a virtual lane line is generated between two lanes in a lane pair with a far lower priority.

For example, a sequence of unprocessed lane pairs in the L lane pairs may be first arranged in descending order of connection priorities, and then a to-be-processed lane pair is selected in descending order of the connection priorities of the unprocessed lane pairs in the L lane pairs, and the following operations are performed: Whether a virtual lane line generated between to-be-processed lanes conflicts with a previously generated virtual lane line is determined. When the virtual lane line generated between the to-be-processed lanes does not conflict with the previously generated virtual lane line, an optional virtual lane line may be generated between the to-be-processed lanes. Alternatively, if the virtual lane line generated between the two lanes in the to-be-processed lane pair conflicts with the previously generated virtual lane line, the to-be-processed lane pair may be skipped, a lane pair with a far lower connection priority is selected. The foregoing operations continue to be performed until the last lane pair in the L lane pairs completes the foregoing operations.

S1104: The vehicle control apparatus sends priority information of the L lane pairs to a user interface of the upper-layer application by using the map module.

S1105: The vehicle control apparatus displays the generated virtual lane line and the priority information of the L lane pairs on the user interface through the upper-layer application.

S1106: The operator may select a next operation based on the virtual lane line and the priority information of the L lane pairs that are displayed on the user interface of the upper-layer application.

For example, during implementation, the operator may confirm storing, so that the map module in the vehicle control apparatus can perform S1107. Alternatively, when the operator may determine to delete some lane lines in the previously generated virtual lane lines or add a new lane pair, steps are re-performed starting from step S1102.

S1107: The operator delivers a storing instruction to the map module through the user interface of the upper-layer application.

S1108: Store an updated first electronic map.

In this embodiment, the vehicle control apparatus generates the optional virtual lane line based on information such as the service priority, the lane change association relationship, the preset driving rule, and the traffic flow. It may be understood that, compared with that in a method in which only a virtual lane line that meets a production task is generated, in this embodiment, some optional virtual lane lines are generated, and this increases selectability of selecting a virtual lane line by an autonomous vehicle, and improves flexibility of a cloud server in uniformly scheduling, planning, and guiding a plurality of vehicles at a road junction. In addition, because more virtual lane lines generated in this embodiment further meet the preset conflict rule, the generated virtual lane lines can further reduce calculation pressure of the vehicle control apparatus.

Based on a same technical concept, an embodiment of this application further provides an electronic map generation apparatus, configured to perform the electronic map generation method in the foregoing method embodiments. For related features, refer to the foregoing method embodiments. Details are not described herein again.

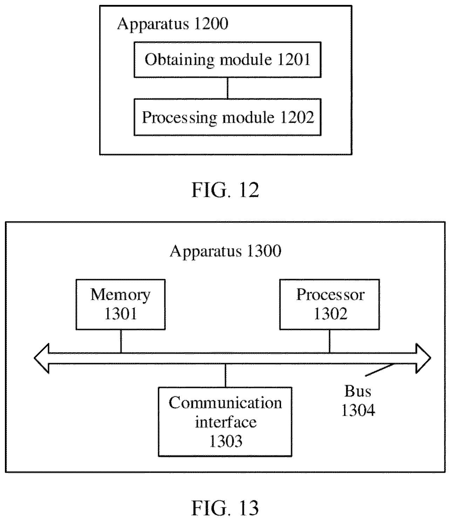

As shown in FIG. 12, the electronic map generation apparatus may include: an obtaining module 1201, configured to obtain a first electronic map, where the first electronic map includes a first road junction, and the first road junction includes a first upstream lane and a first downstream lane; and a processing module 1202, configured to generate M virtual lane lines between the first upstream lane and the first downstream lane, where the M virtual lane lines are used to update the first electronic map, and M is an integer greater than 1.

In a possible implementation, the processing module 1202 is specifically configured to generate the M virtual lane lines between the first upstream lane and the first downstream lane based on at least one of a preset vehicle motion characteristic and a driving environment.

In a possible implementation, the processing module 1202 is further configured to display the M virtual lane lines.

In a possible implementation, at least two of the M virtual lane lines have different presentation manners, and the different presentation manners include at least one of the following: the at least two virtual lane lines have different colors, the at least two virtual lane lines have different virtual-real degrees, and the at least two virtual lane lines have different thicknesses.

In a possible implementation, the processing module 1202 is further configured to output first information, where the first information indicates information about at least one of the M virtual lane lines, and the information about the at least one virtual lane line includes at least one of the following: a right of way of the at least one virtual lane line, a type of a vehicle to which the at least one virtual lane line is applicable, and physical information of the at least one virtual lane line.

In a possible implementation, the first upstream lane and/or the first downstream lane are/is an operation lane, and the operation lane includes a lane having an operation location and/or a production device of the vehicle.

In a possible implementation, the processing module 1202 is further configured to perform: step 21 of determining, from S upstream lanes and T downstream lanes at the first road junction, a to-be-connected upstream lane and a to-be-connected downstream lane that have a topological relationship, where the to-be-connected upstream lane and/or the to-be-connected downstream lane are/is an operation lane, and S and T are positive integers; step 22 of determining whether the to-be-connected upstream lane and the to-be-connected downstream lane form a target connection lane pair, where when a vehicle having the preset vehicle motion characteristic can travel from the to-be-connected upstream lane to the to-be-connected downstream lane within a range of the first road junction, the to-be-connected upstream lane and the to-be-connected downstream lane form the target connection lane pair; and step 23 of determining the to-be-connected upstream lane as the first upstream lane and determining the to-be-connected downstream lane as the first downstream lane if the to-be-connected upstream lane and the to-be-connected downstream lane form the target connection lane pair.

In a possible implementation, the processing module 1202 is further configured to: if the to-be-connected upstream lane and the to-be-connected downstream lane do not form the target connection lane pair, update lane type information of the first road junction, where the updating lane type information of the first road junction includes at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane; and re-perform step 21, step 22, and step 23.

In a possible implementation, the processing module 1202 is further configured to: output second information, where the second information indicates that the to-be-connected upstream lane and the to-be-connected downstream lane do not form the target connection lane pair; and receive third information, where the third information indicates to update the lane type information of the first road junction.

In a possible implementation, the processing module 1202 is further configured to: partition, as the range of the first road junction, a target range in which at least one of the S upstream lanes and the T downstream lanes is adjacent to the first road junction; and re-perform step 21, step 22, and step 23 based on the first road junction obtained through the range partition.

In a possible implementation, the processing module 1202 is further configured to: when a quantity of target connection lane pairs formed by the S upstream lanes and the T downstream lanes is less than or equal to a preset quantity threshold, partition, as the range of the first road junction, the target range in which the at least one of the S upstream lanes and the T downstream lanes is adjacent to the first road junction.

In a possible implementation, the processing module 1202 is further configured to: output fourth information, where the fourth information indicates that the quantity of target connection lane pairs is less than or equal to the preset quantity threshold; and receive fifth information, where the fifth information indicates the target range in which the at least one lane is adjacent to the first road junction.

In a possible implementation, the processing module 1202 is further configured to: if the to-be-connected upstream lane and the to-be-connected downstream lane do not form the target connection lane pair, update the to-be-connected downstream lane to an adjacent lane of the to-be-connected downstream lane, and/or update the to-be-connected upstream lane to an adjacent lane of the to-be-connected upstream lane; and re-perform step 21, step 22, and step 23.

In a possible implementation, the obtaining module 1201 is further configured to: obtain K lane pairs from the S upstream lanes and the T downstream lanes, where each of the K lane pairs includes one of the S upstream lanes and one of the T downstream lanes, and there is a preset topological relationship between the upstream lane and the downstream lane in each lane pair. The processing module 1202 is further configured to: determine a connection priority of each lane pair; and determine the first upstream lane and the first downstream lane based on the connection priority of each lane pair.

In a possible implementation, the processing module 1202 is further configured to determine the connection priority of each lane pair based on a preset right of way of the upstream lane and a preset right of way of the downstream lane in each lane pair.

In a possible implementation, the preset right of way is determined based on at least one of the following information: a service priority, a lane change association relationship, or a preset driving rule.

In a possible implementation, the processing module 1202 is further configured to determine the connection priority of each lane pair based on a traffic flow from the upstream lane to the downstream lane in each lane pair.

In a possible implementation, the processing module 1202 is further configured to: output sixth information, where the sixth information indicates the connection priority of each lane pair; receive seventh information, where the seventh information indicates connection priorities of L lane pairs, and the L lane pairs include all or some of the K lane pairs; and determine the first upstream lane and the first downstream lane based on the seventh information.

In a possible implementation, the processing module 1202 is further configured to: select a to-be-processed lane pair in descending order of connection priorities of unprocessed lane pairs in the L lane pairs; determine whether the to-be-processed lane pair and a lane pair for which a virtual lane line is generated meet a conflict determining rule; and if the to-be-processed lane pair and the lane pair for which the virtual lane line is generated meet the conflict determining rule, determine an upstream lane in the to-be-processed lane pair as the first upstream lane, and determine a downstream lane in the to-be-processed lane pair as the first downstream lane.

In a possible implementation, the processing module 1202 is further configured to: if the to-be-processed lane pair and the lane pair for which the virtual lane line is generated do not meet the conflict determining rule, update an unprocessed lane whose priority is lower than that of the to-be-processed lane pair to the to-be-processed lane pair.

FIG. 13 is a diagram of a structure of an electronic map generation apparatus according to another embodiment of this application. The apparatus shown in FIG. 13 may be configured to perform the method according to any one of the foregoing embodiments.

As shown in FIG. 13, the apparatus 1300 in this embodiment includes a memory 1301, a processor 1302, a communication interface 1303, and a bus 1304. Communication connections between the memory 1301, the processor 1302, and the communication interface 1303 are implemented through the bus 1304.

The memory 1301 may be a read-only memory (read-only memory, ROM), a static storage device, a dynamic storage device, or a random access memory (random access memory, RAM). The memory 1301 may store a program. When the program stored in the memory 1301 is executed by the processor 1302, the processor 1302 is configured to perform the steps of the methods shown in FIG. 5 to FIG. 10.

The processor 1302 may be a general-purpose central processing unit (central processing unit, CPU), a microprocessor, an application-specific integrated circuit (application-specific integrated circuit, ASIC), or one or more integrated circuits, configured to execute a related program, to implement the methods shown in FIG. 5 to FIG. 10 of this application.

The processor 1302 may alternatively be an integrated circuit chip and has a signal processing capability. In an implementation process, the steps of the foregoing methods in FIG. 5 to FIG. 10 of embodiments of this application can be implemented by using a hardware integrated logical circuit in the processor 1302, or by using instructions in a form of software.

The processor 1302 may be alternatively a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor 1302, functions that need to be performed by units included in the apparatus in this application. For example, the processor 1302 may perform steps/functions in embodiments shown in FIG. 5 to FIG. 10.

The communication interface 1303 may use, but not limited to, a transceiver apparatus of a transceiver type, to implement communication between the apparatus 1300 and another device or a communication network.

The bus 1304 may include a path for information transmission between various components (for example, the memory 1301, the processor 1302, and the communication interface 1303) of the apparatus 1300.

It should be understood that the apparatus 1300 shown in an embodiment of this application may be an electronic device, or may be a chip configured in an electronic device.

All or some of the foregoing embodiments may be implemented by using software, hardware, firmware, or any combination thereof. When the software is used to implement embodiments, all or some of the foregoing embodiments may be implemented in a form of a computer program product. The computer program product includes one or more computer instructions or computer programs. When the program instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic map generation method, comprising:
obtaining a first electronic map, wherein the first electronic map comprises a first road junction, and the first road junction comprises a first upstream lane and a first downstream lane; and
generating M virtual lane lines between the first upstream lane and the first downstream lane, wherein the M virtual lane lines are used to update the first electronic map, and M is an integer greater than or equal to 1.

2. The method according to claim 1, wherein the generating M virtual lane lines between the first upstream lane and the first downstream lane comprises:
generating the M virtual lane lines between the first upstream lane and the first downstream lane based on at least one of a preset vehicle motion characteristic and a driving environment.

3. The method according to claim 1 or 2, wherein the method further comprises:
displaying the M virtual lane lines.

4. The method according to claim 3, wherein at least two of the M virtual lane lines have different presentation manners, and the different presentation manners comprise at least one of the following: the at least two virtual lane lines have different colors, the at least two virtual lane lines have different virtual-real degrees, and the at least two virtual lane lines have different thicknesses.

5. The method according to claim 3 or 4, wherein the method further comprises:
outputting first information, wherein the first information indicates information about at least one of the M virtual lane lines, and the information about the at least one virtual lane line comprises at least one of the following: a right of way of the at least one virtual lane line, a type of a vehicle to which the at least one virtual lane line is applicable, and physical information of the at least one virtual lane line.

6. The method according to any one of claims 1 to 5, wherein the first upstream lane and/or the first downstream lane are/is an operation lane, and the operation lane comprises a lane having an operation location and/or a production device of the vehicle.

7. The method according to claim 6, wherein the method further comprises:
step 21 of determining, from S upstream lanes and T downstream lanes at the first road junction, a to-be-connected upstream lane and a to-be-connected downstream lane that have a topological relationship, wherein the to-be-connected upstream lane and/or the to-be-connected downstream lane are/is an operation lane, and S and T are positive integers;
step 22 of determining whether the to-be-connected upstream lane and the to-be-connected downstream lane form a target connection lane pair, wherein when a vehicle having the preset vehicle motion characteristic can travel from the to-be-connected upstream lane to the to-be-connected downstream lane within a range of the first road junction, the to-be-connected upstream lane and the to-be-connected downstream lane form the target connection lane pair; and
step 23 of determining the to-be-connected upstream lane as the first upstream lane and determining the to-be-connected downstream lane as the first downstream lane if the to-be-connected upstream lane and the to-be-connected downstream lane form the target connection lane pair.

8. The method according to claim 7, wherein the method further comprises:
if the to-be-connected upstream lane and the to-be-connected downstream lane do not form the target connection lane pair, updating lane type information of the first road junction, wherein the updating lane type information of the first road junction comprises at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane; and
re-performing step 21, step 22, and step 23.

9. The method according to claim 8, wherein the method further comprises:
outputting second information, wherein the second information indicates that the to-be-connected upstream lane and the to-be-connected downstream lane do not form the target connection lane pair; and
receiving third information, wherein the third information indicates to update the lane type information of the first road junction.

10. The method according to claim 7, wherein the method further comprises:
partitioning, as the range of the first road junction, a target range in which at least one of the S upstream lanes and the T downstream lanes is adjacent to the first road junction; and
re-performing step 21, step 22, and step 23 based on the first road junction obtained through the range partition.

11. The method according to claim 10, wherein the partitioning, as the range of the first road junction, a target range in which at least one of the S upstream lanes and the T downstream lanes is adjacent to the first road junction comprises:
when a quantity of target connection lane pairs formed by the S upstream lanes and the T downstream lanes is less than or equal to a preset quantity threshold, partitioning, as the range of the first road junction, the target range in which the at least one of the S upstream lanes and the T downstream lanes is adjacent to the first road junction.

12. The method according to claim 11, wherein the method further comprises:
outputting fourth information, wherein the fourth information indicates that the quantity of target connection lane pairs is less than or equal to the preset quantity threshold; and
receiving fifth information, wherein the fifth information indicates the target range in which the at least one lane is adjacent to the first road junction.

13. The method according to claim 7, wherein the method further comprises:
if the to-be-connected upstream lane and the to-be-connected downstream lane do not form the target connection lane pair, updating the to-be-connected downstream lane to an adjacent lane of the to-be-connected downstream lane, and/or updating the to-be-connected upstream lane to an adjacent lane of the to-be-connected upstream lane; and
re-performing step 21, step 22, and step 23.

14. The method according to any one of claims 7 to 13, wherein the method further comprises:
obtaining K lane pairs from the S upstream lanes and the T downstream lanes, wherein each of the K lane pairs comprises one of the S upstream lanes and one of the T downstream lanes, and there is a preset topological relationship between the upstream lane and the downstream lane in each lane pair;
determining a connection priority of each lane pair; and
determining the first upstream lane and the first downstream lane based on the connection priority of each lane pair.

15. The method according to claim 14, wherein the determining a connection priority of each lane pair comprises:
determining the connection priority of each lane pair based on a preset right of way of the upstream lane and a preset right of way of the downstream lane in each lane pair.

16. The method according to claim 15, wherein the preset right of way is determined based on at least one of the following information: a service priority, a lane change association relationship, or a preset driving rule.

17. The method according to claim 14, wherein the determining a connection priority of each lane pair comprises:
determining the connection priority of each lane pair based on a traffic flow from the upstream lane to the downstream lane in each lane pair.

18. The method according to any one of claims 14 to 17, wherein the determining the first upstream lane and the first downstream lane based on the connection priority of each lane pair comprises:
outputting sixth information, wherein the sixth information indicates the connection priority of each lane pair;
receiving seventh information, wherein the seventh information indicates connection priorities of L lane pairs, and the L lane pairs comprise all or some of the K lane pairs; and
determining the first upstream lane and the first downstream lane based on the seventh information.

19. The method according to claim 18, wherein the determining the first upstream lane and the first downstream lane based on the seventh information comprises:
selecting a to-be-processed lane pair in descending order of connection priorities of unprocessed lane pairs in the L lane pairs;
determining whether the to-be-processed lane pair and a lane pair for which a virtual lane line is generated meet a conflict determining rule; and
if the to-be-processed lane pair and the lane pair for which the virtual lane line is generated meet the conflict determining rule, determining an upstream lane in the to-be-processed lane pair as the first upstream lane, and determining a downstream lane in the to-be-processed lane pair as the first downstream lane.

20. The method according to claim 19, wherein the method further comprises:
if the to-be-processed lane pair and the lane pair for which the virtual lane line is generated do not meet the conflict determining rule, updating an unprocessed lane pair whose priority is lower than that of the to-be-processed lane pair to the to-be-processed lane pair.

21. An electronic map, wherein the electronic map comprises a first road junction, the first road junction comprises a first upstream lane and a first downstream lane, M virtual lane lines are comprised between the first upstream lane and the first downstream lane, and M is an integer greater than or equal to 1.

22. The electronic map according to claim 21, wherein at least two of the M virtual lane lines have different presentation manners, and the different presentation manners comprise at least one of the following: the at least two virtual lane lines have different colors, the at least two virtual lane lines have different virtual-real degrees, and the at least two virtual lane lines have different thicknesses.

23. The electronic map according to claim 21 or 22, wherein the electronic map further comprises first information, the first information indicates information about at least one of the M virtual lane lines, and the information about the at least one virtual lane line comprises at least one of the following: a right of way of the at least one virtual lane line, a type of a vehicle to which the at least one virtual lane line is applicable, and physical information of the at least one virtual lane line.

24. The electronic map according to any one of claims 21 to 23, wherein the first upstream lane and/or the first downstream lane are/is an operation lane, and the operation lane comprises a lane having an operation location and/or a production device of the vehicle.

25. An electronic map generation apparatus, wherein the apparatus comprises:
an obtaining module, configured to obtain a first electronic map, wherein the first electronic map comprises a first road junction, and the first road junction comprises a first upstream lane and a first downstream lane; and
a processing module, configured to generate M virtual lane lines between the first upstream lane and the first downstream lane, wherein the M virtual lane lines are used to update the first electronic map, and M is an integer greater than or equal to 1.

26. The apparatus according to claim 25, wherein the processing module is specifically configured to:
generate the M virtual lane lines between the first upstream lane and the first downstream lane based on at least one of a preset vehicle motion characteristic and a driving environment.

27. The apparatus according to claim 25 or 26, wherein the processing module is further configured to:
display the M virtual lane lines.

28. The apparatus according to claim 27, wherein at least two of the M virtual lane lines have different presentation manners, and the different presentation manners comprise at least one of the following: the at least two virtual lane lines have different colors, the at least two virtual lane lines have different virtual-real degrees, and the at least two virtual lane lines have different thicknesses.

29. The apparatus according to claim 27 or 28, wherein the processing module is further configured to:
output first information, wherein the first information indicates information about at least one of the M virtual lane lines, and the information about the at least one virtual lane line comprises at least one of the following: a right of way of the at least one virtual lane line, a type of a vehicle to which the at least one virtual lane line is applicable, and physical information of the at least one virtual lane line.

30. The apparatus according to any one of claims 25 to 29, wherein the first upstream lane and/or the first downstream lane are/is an operation lane, and the operation lane comprises a lane having an operation location and/or a production device of the vehicle.

31. The apparatus according to claim 30, wherein the processing module is further configured to perform:
step 21 of determining, from S upstream lanes and T downstream lanes at the first road junction, a to-be-connected upstream lane and a to-be-connected downstream lane that have a topological relationship, wherein the to-be-connected upstream lane and/or the to-be-connected downstream lane are/is an operation lane, and S and T are positive integers;
step 22 of determining whether the to-be-connected upstream lane and the to-be-connected downstream lane form a target connection lane pair, wherein when a vehicle having the preset vehicle motion characteristic can travel from the to-be-connected upstream lane to the to-be-connected downstream lane within a range of the first road junction, the to-be-connected upstream lane and the to-be-connected downstream lane form the target connection lane pair; and
step 23 of determining the to-be-connected upstream lane as the first upstream lane and determining the to-be-connected downstream lane as the first downstream lane if the to-be-connected upstream lane and the to-be-connected downstream lane form the target connection lane pair.

32. The apparatus according to claim 31, wherein the processing module is further configured to:
if the to-be-connected upstream lane and the to-be-connected downstream lane do not form the target connection lane pair, update lane type information of the first road junction, wherein the updating lane type information of the first road junction comprises at least one of the following operations: updating a lane type of the to-be-connected lane from an operation lane to a non-operation lane, updating a lane type of a second upstream lane in the S upstream lanes from a non-operation lane to an operation lane, and updating a lane type of a second downstream lane in the T downstream lanes from a non-operation lane to an operation lane; and
re-perform step 21, step 22, and step 23.

33. The apparatus according to claim 32, wherein the processing module is further configured to:
output second information, wherein the second information indicates that the to-be-connected upstream lane and the to-be-connected downstream lane do not form the target connection lane pair; and
receive third information, wherein the third information indicates to update the lane type information of the first road junction.

34. The apparatus according to claim 31, wherein the processing module is further configured to:
partition, as the range of the first road junction, a target range in which at least one of the S upstream lanes and the T downstream lanes is adjacent to the first road junction; and
re-perform step 21, step 22, and step 23 based on the first road junction obtained through the range partition.

35. The apparatus according to claim 34, wherein the processing module is further configured to:
when a quantity of target connection lane pairs formed by the S upstream lanes and the T downstream lanes is less than or equal to a preset quantity threshold, partition, as the range of the first road junction, the target range in which the at least one of the S upstream lanes and the T downstream lanes is adjacent to the first road junction.

36. The apparatus according to claim 35, wherein the processing module is further configured to:
output fourth information, wherein the fourth information indicates that the quantity of target connection lane pairs is less than or equal to the preset quantity threshold; and
receive fifth information, wherein the fifth information indicates the target range in which the at least one lane is adjacent to the first road junction.

37. The apparatus according to claim 31, wherein the processing module is further configured to:
if the to-be-connected upstream lane and the to-be-connected downstream lane do not form the target connection lane pair, update the to-be-connected downstream lane to an adjacent lane of the to-be-connected downstream lane, and/or update the to-be-connected upstream lane to an adjacent lane of the to-be-connected upstream lane; and
re-perform step 21, step 22, and step 23.

38. The apparatus according to any one of claims 31 to 37, wherein the obtaining module is further configured to:
obtain K lane pairs from the S upstream lanes and the T downstream lanes, wherein each of the K lane pairs comprises one of the S upstream lanes and one of the T downstream lanes, and there is a preset topological relationship between the upstream lane and the downstream lane in each lane pair; and
the processing module is further configured to:
determine a connection priority of each lane pair; and
determine the first upstream lane and the first downstream lane based on the connection priority of each lane pair.

39. The apparatus according to claim 38, wherein the processing module is further configured to:
determine the connection priority of each lane pair based on a preset right of way of the upstream lane and a preset right of way of the downstream lane in each lane pair.

40. The apparatus according to claim 39, wherein the preset right of way is determined based on at least one of the following information: a service priority, a lane change association relationship, or a preset driving rule.

41. The apparatus according to claim 38, wherein the processing module is further configured to:
determine the connection priority of each lane pair based on a traffic flow from the upstream lane to the downstream lane in each lane pair.

42. The apparatus according to any one of claims 39 to 41, wherein the processing module is further configured to:
output sixth information, wherein the sixth information indicates the connection priority of each lane pair;
receive seventh information, wherein the seventh information indicates connection priorities of L lane pairs, and the L lane pairs comprise all or some of the K lane pairs; and
determine the first upstream lane and the first downstream lane based on the seventh information.

43. The apparatus according to claim 42, wherein the processing module is further configured to:
select a to-be-processed lane pair in descending order of connection priorities of unprocessed lane pairs in the L lane pairs;
determine whether the to-be-processed lane pair and a lane pair for which a virtual lane line is generated meet a conflict determining rule; and
if the to-be-processed lane pair and the lane pair for which the virtual lane line is generated meet the conflict determining rule, determine an upstream lane in the to-be-processed lane pair as the first upstream lane, and determine a downstream lane in the to-be-processed lane pair as the first downstream lane.

44. The apparatus according to claim 43, wherein the processing module is further configured to:
if the to-be-processed lane pair and the lane pair for which the virtual lane line is generated do not meet the conflict determining rule, update an unprocessed lane pair whose priority is lower than that of the to-be-processed lane pair to the to-be-processed lane pair.

45. A vehicle, wherein the vehicle comprises the module according to any one of claims 25 to 44.

46. A server, wherein the server comprises the module according to any one of claims 25 to 44.

47. An electronic map generation apparatus, comprising a memory and a processor, wherein
the memory is configured to store program instructions; and
the processor is configured to invoke the program instructions in the memory, to perform the method according to any one of claims 1 to 20.

48. A computer-readable medium, wherein the computer-readable medium stores program code for execution by a computer, and the program code comprises instructions for performing the method according to any one of claims 1 to 20.

49. A computer program product, wherein the computer program product comprises computer program code, and when the computer program code is run on a computer, the computer is enabled to implement the method according to any one of claims 1 to 20.
